# EUROPEAN PATENT SPECIFICATION

(11) **EP 4 333 523 B1**
(45) Date of publication and mention of the grant of the patent: **16.09.2026**
(21) Application number: 21938526.7
(22) Date of filing: 30.04.2021
(51) Int. Cl.: H04W 72/04, H04W 52/04, H04L 5/00, H04W 72/232, H04W 52/08, H04W 52/14, H04W 52/32

(54) **WIRELESS COMMUNICATION METHOD, APPARATUS AND SYSTEM**
DRAHTLOSKOMMUNIKATIONSVERFAHREN, -VORRICHTUNG UND -SYSTEM
PROCÉDÉ, APPAREIL ET SYSTÈME DE COMMUNICATION SANS FIL

(43) Date of publication of application: 06.03.2024
(60) Divisional application: 25171814.4 / 4 580 267
(73) Proprietor: 1FINITY Inc., Kawasaki-shi, Kanagawa 211-8588 (JP)
(72) Inventor: CHEN, Zhe, Beijing 100022 (CN); WANG, Xin, Beijing 100022 (CN)
(74) Representative: Haseltine Lake Kempner LLP
(86) International application number: PCT/CN2021/091647
(87) International publication number: WO 2022/227052

(56) References cited:
- WO-A1-2020/030144
- CN-A- 110 034 875
- CN-A- 111 386 734
- US-A1- 2018 145 796
- VIVO: "Enhancements on Multi-TRP for PDCCH, PUCCH and PUSCH", vol. RAN WG1, no. e-Meeting; 20210412 - 20210420, 7 April 2021 (2021-04-07), XP052177212, Retrieved from the Internet <URL:https://ftp.3gpp.org/tsg_ran/WG1_RL1/TSGR1_104b-e/Docs/R1-2102507.zip R1-2102507.docx> [retrieved on 20210407]
- MODERATOR (NOKIA ET AL: "Summary #1 of Multi-TRP PUCCH and PUSCH", vol. RAN WG1, no. e-Meeting; 20210412 - 20210420, 12 April 2021 (2021-04-12), XP051995272, Retrieved from the Internet <URL:https://ftp.3gpp.org/tsg_ran/WG1_RL1/TSGR1_104b-e/Inbox/R1-2103843.zip R1-2103843.docx> [retrieved on 20210412]
- SPREADTRUM COMMUNICATIONS: "Discussion on enhancements on Multi-TRP for PDCCH, PUCCH and PUSCH", vol. RAN WG1, no. e-Meeting; 20210412 - 20210420, 7 April 2021 (2021-04-07), XP052177150, Retrieved from the Internet <URL:https://ftp.3gpp.org/tsg_ran/WG1_RL1/TSGR1_104b-e/Docs/R1-2102442.zip R1-2102442_Discussion on enhancements on Multi-TRP for PDCCHPUCCH and PUSCH_clean.docx> [retrieved on 20210407]
- QUALCOMM INCORPORATED: "Enhancements on Multi-TRP for PDCCH, PUCCH and PUSCH", vol. RAN WG1, no. e-Meeting; 20210412 - 20210420, 7 April 2021 (2021-04-07), XP052177951, Retrieved from the Internet <URL:https://ftp.3gpp.org/tsg_ran/WG1_RL1/TSGR1_104b-e/Docs/R1-2103151.zip R1-2103151 Enhancements on Multi-TRP for PDCCH, PUCCH and PUSCH.docx> [retrieved on 20210407]
- CMCC: "Enhancements on Multi-TRP for PDCCH, PUCCH and PUSCH", vol. RAN WG1, no. e-Meeting; 20210412 - 20210420, 6 April 2021 (2021-04-06), XP051993260, Retrieved from the Internet <URL:https://ftp.3gpp.org/tsg_ran/WG1_RL1/TSGR1_104b-e/Docs/R1-2102878.zip R1-2102878.doc> [retrieved on 20210406]
- MODERATOR (NOKIA ET AL: "Summary of Multi-TRP for PUCCH and PUSCH", vol. RAN WG1, no. e-Meeting; 20210125 - 20210205, 26 January 2021 (2021-01-26), XP051975886, Retrieved from the Internet <URL:https://ftp.3gpp.org/tsg_ran/WG1_RL1/TSGR1_104-e/Docs/R1-2101784.zip R1-2101784.docx> [retrieved on 20210126]
- INTEL CORPORATION: "Multi-TRP enhancements for PDCCH, PUCCH and PUSCH", 3GPP DRAFT; R1-2103015, vol. RAN WG1, 7 April 2021 (2021-04-07), pages 1 - 21, XP052177823

## Description

### Field

This disclosure relates to the field of communications.

### Background

In order to meet requirements of URLLC (ultra reliable and Low Latency communication) services for high reliability and low latency, NR Rel-16 (New Radio Release 16) has introduced a corresponding uplink data transmission mechanism. This mechanism supports more flexible uplink data transmission, thereby reducing latency of uplink data transmission. Reference may be made to:
VIVO: "Enhancements on Multi-TRP for PDCCH, PUCCH and PUSCH", 3GPP DRAFT; R1-2102507, 3RD GENERATION PARTNERSHIP PROJECT (3GPP), MOBILE COMPETENCE CENTRE; 650, ROUTE DES LUCIOLES; F-06921 SOPHIAANTIPOLIS CEDEX; FRANCE, vol. RAN WG1, no. e-Meeting; 7 April 2021, which relates to a discussion on enhancements on Multi-TRP for PDCCH, PUCCH and PUSCH;
MODERATOR (NOKIA ET AL: "Summary #1 of Multi-TRP PUCCH and PUSCH", 3GPP DRAFT; R1-2103843, 3RD GENERATION PARTNERSHIP PROJECT (3GPP), MOBILE COMPETENCE CENTRE; 650, ROUTE DES LUCIOLES; F-06921 SOPHIAANTIPOLIS CEDEX; FRANCE, vol. RAN WG1, no. e-Meeting; 12 April 2021, which relates to a summary of Multi-TRP PUCCH and PUSCH;
SPREADTRUM COMMUNICATIONS: "Discussion on enhancements on Multi-TRP for PDCCH, PUCCH and PUSCH", 3GPP DRAFT; R1-2102442, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 7 April 2021, which relates to a discussion on enhancements on Multi-TRP for PDCCH, PUCCH and PUSCH;
QUALCOMM INCORPORATED: "Enhancements on Multi-TRP for PDCCH, PUCCH and PUSCH", 3GPP DRAFT; R1-2103151, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. eMeeting; 7 April 2021, which relates to a discussion on enhancements on Multi-TRP for PDCCH, PUCCH and PUSCH;
MODERATOR (NOKIA ET AL: "Summary of Multi-TRP for PUCCH and PUSCH", 3GPP DRAFT; R1-2101784, 3RD GENERATION PARTNERSHIP PROJECT (3GPP), MOBILE COMPETENCE CENTRE; 650, ROUTE DES LUCIOLES; F-06921 SOPHIAANTIPOLIS CEDEX; FRANCE, vol. RAN WG1, no. e-Meeting; 26 January 2021, which relates to a discussion on enhancements on Multi-TRP for PDCCH, PUCCH and PUSCH;
CMCC: "Enhancements on Multi-TRP for PDCCH, PUCCH and PUSCH", 3GPP DRAFT; R1-2102878, 3RD GENERATION PARTNERSHIP PROJECT (3GPP), MOBILE COMPETENCE CENTRE; 650, ROUTE DES LUCIOLES; F-06921 SOPHIAANTIPOLIS CEDEX; FRANCE, vol. RAN WG1, no. e-Meeting; 6 April 2021, which relates to a summary of Multi-TRP for PUCCH and PUSCH; and
US 2018/145796 A1 which relates to a method and apparatus for sending uplink control information comprising a terminal receiving downlink control information, DCI, sent by a base station, wherein the DCI comprises at least one of the following: a related first control domain for indicating downlink scheduling, a second control domain for indicating that the terminal determines an HARQ-ACK feedback mode and a third control domain for indicating a PUCCH resource used by the terminal when the terminal determines to feed back an HARQ-ACK; the terminal determining related parameter information required when the terminal feeds back HARQ-ACK information according to the downlink control information.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that as NR (New radio) supports a central transmission frequency of up to 52.6 GHz, in high-frequency scenarios, due to that a diffraction ability of a high-frequency radio signal is relatively poor, it is prone to be affected by blockages. Degradation of channel quality caused by the blockages is very detrimental to uplink transmission. This is because that according to an existing beam failure recovery mechanism, it costs tens of milliseconds at most to recover a communication link, while a requirement of URLLC for communication delay is generally much less than tens of milliseconds.

Therefore, a high-frequency uplink is prone to be affected by blockages, and channels may possibly instantly deteriorate. The existing recovery mechanism takes too long to meet the requirements of URLLC services for latency. In order to reduce impacts of blockages on uplink data transmission, a feasible approach is to transmit uplink data in a spatial diversity manner. That is, at a terminal equipment side, the same data may reach a network device via different spatial field paths or via different TRPs (transmission and reception points) at different times. Hence, in a case where blockage occurs in a path, other paths may still continue to operate, thereby ensuring low latency and high reliability of uplink data.

To support the above multi-TRP (mTRP) uplink transmission, a method is to add additional fields in corresponding scheduled downlink control information (DCI) to support mTRP uplink transmission; and in addition, DCI with no additional fields being added is used to schedule single TRP (sTRP) uplink transmission. However, when such a method is used, for a terminal equipment supporting both mTRP uplink transmission and sTRP uplink transmission on the same bandwidth part (BWP), especially when the terminal equipment needs to dynamically switch between sTRP uplink transmission and mTRP uplink transmission, blind detection of DCI of two different sizes is needed, which greatly consumes an ability of the terminal equipment to blindly detect control channels.

To address the above issues, a feasible solution is to semi-statically configure a DCI format by a network device, the DCI format corresponding to a certain size and supporting both scheduling sTRP uplink transmission and scheduling mTRP uplink transmissions That is, the DCI format may still support sTRP uplink scheduling with addition of the above additional fields.

However, on the one hand, there is currently no feasible method to support the use of the DCI format scheduling sTRP uplink transmission with the addition of the above additional fields, or, in other words, there is currently no method to accurately indicate whether a determined corresponding uplink signal corresponds to sTRP transmission or mTRP transmission via DCI.

On the other hand, in the above situation, how to transmit corresponding uplink signals when the DCI includes two closed-loop power control indicators is also a problem needing to be solved.

Furthermore, for a terminal equipment supporting both mTRP uplink transmission and sTRP uplink transmission on different BWPs, when the BWPs are switched, that is, when the terminal equipment is switched from a BWP only able to perform sTRP uplink transmission to a BWP able to perform mTRP uplink transmission, as sizes of DCI fields configured for the two BWPs are different, how to interpret corresponding DCI field is also a problem needing to be solved.

In order to solve at least one of the above problems or other similar problems, embodiments of this disclosure provide a wireless communication method and apparatus and a system. The present invention is defined by the appended independent claim to which reference should now be made. Specific embodiments are defined in the dependent claims.

An advantage of the embodiments of this disclosure exists in that according to the embodiments of this disclosure, in a case where the terminal equipment is able to transmit sTRP uplink transmission and mTRP uplink transmission, a corresponding indication is correctly obtained according to the received downlink control information. And furthermore, according to the indication of the above downlink control information, the terminal equipment is able to ignore some DCI fields that are not used.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of the wireless communication method of an embodiment of this disclosure;
FIGs. 2-7 are schematic diagrams of codebook-based PUSCH transmission scheduled by DCI;
FIG. 8 is a schematic diagram of an example of the wireless communication method of the embodiment of this disclosure;
FIG. 9 is a schematic diagram of another example of the wireless communication method of the embodiment of this disclosure;
FIGs. 10-12 are schematic diagrams of three examples of PUSCH transmission scheduled by DCI;
FIGs. 13-17 are schematic diagrams of five examples of PUCCH transmission scheduled by DCI;
FIG. 18 is a schematic diagram of an example of the wireless communication method of the embodiment of this disclosure;
FIG. 19 is a schematic diagram of another example of the wireless communication method of the embodiment of this disclosure;
FIGs. 20-23 are schematic diagrams of four examples of performing BWP switching by the terminal equipment;
FIG. 24 is a schematic diagram of an example of the wireless communication apparatus of an embodiment of this disclosure;
FIG. 25 is a schematic diagram of another example of the wireless communication apparatus of the embodiment of this disclosure;
FIG. 26 is a schematic diagram of a further example of the wireless communication apparatus of the embodiment of this disclosure;
FIG. 27 is a schematic diagram of still another example of the wireless communication apparatus of the embodiment of this disclosure;
FIG. 28 is a schematic diagram of yet another example of the wireless communication apparatus of the embodiment of this disclosure;
FIG. 29 is a schematic diagram of the communication system of an embodiment of this disclosure; and
FIG. 30 is a schematic diagram of the terminal equipment of an embodiment of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the present invention is defined by the scope of the appended independent claim.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC), etc.

In the embodiments, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc.

In the embodiments, the terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Various embodiments of this disclosure shall be described below with reference to the accompanying drawings. These embodiments are illustrative only and are not intended to limit this disclosure.

### Embodiment of a first aspect

The embodiment of this disclosure provides a wireless communication method, which shall be described from a side of a terminal equipment.

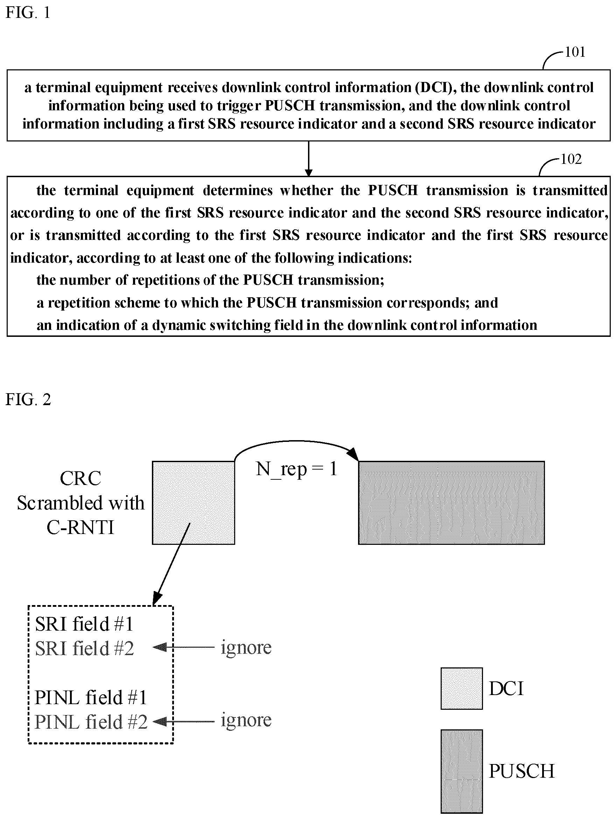

FIG. 1 is schematic diagram of the wireless communication method of the embodiment of this disclosure. Referring to FIG. 1, the method includes:
101: a terminal equipment receives downlink control information (DCI), the downlink control information being used to trigger PUSCH transmission, and the downlink control information including a first SRS resource indicator and a second SRS resource indicator; and
102: the terminal equipment determines whether the PUSCH transmission is transmitted according to one of the first SRS resource indicator and the second SRS resource indicator, or is transmitted according to the first SRS resource indicator and the second SRS resource indicator, according to at least one of the following indications:
   the number of repetitions of the PUSCH transmission;
   a repetition scheme to which the PUSCH transmission corresponds; and
   an indication of a dynamic switching field in the downlink control information, the dynamic switching field being used to indicate whether the PUSCH transmission is transmitted according to the first SRS resource indicator and the second SRS resource indicator, or is transmitted according to one of the first SRS resource indicator and the second SRS resource indicator.

It should be noted that FIG. 1 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is included in FIG. 1.

According to the method of the embodiment of this disclosure, after receiving the DCI triggering the PUSCH transmission, according to at least one of the number of repetitions of the PUSCH transmission, the repetition scheme to which the PUSCH transmission corresponds and the indication of a DCI field (referred to as a dynamic switching field, which is not limited by its name in this disclosure) in the DCI, the terminal equipment determines which SRS resource indicator or which SRS resource indicators are based to transmit the PUSCH transmission. Hence, whether corresponding uplink transmission corresponds to single TRP transmission or multiple TRP transmission may be accurately determined via the DCI indication, and the uplink transmission is transmitted according to a corresponding DCI indication. Moreover, according to the above DCI indication, the terminal equipment may ignore some DCI fields that are not used.

In the embodiment of this disclosure, the downlink control information is used to trigger PUSCH transmission, that is, the downlink control information is used to trigger transmission of the PUSCH transmission, or the downlink control information is used to schedule transmission of the PUSCH transmission, and expressions thereof are not limited in this disclosure.

In the above embodiment, cyclic redundancy check (CRC) of the downlink control information may be scrambled by a C-RNTI, or may be scrambled by a CS-RNTI, which is not limited in this disclosure. Reference may be made to relevant techniques for specific scrambling methods, which shall not be repeated herein any further.

In the above embodiment, the DCI format of the downlink control information may be DCI format 0_1, or may be DCI format 0_2, that is, the downlink control information may correspond to DCI format 0_1, or may also correspond to DCI format 0_2. Reference may be made to relevant techniques for contents of the DCI format, which shall not be repeated herein any further.

In the above embodiment, the PUSCH transmission may correspond to PUSCH replication Type A, or may correspond to PUSCH replication Type B, which is not limited in this disclosure. Reference may be made to relevant techniques for definitions of PUSCH replication Type A and PUSCH replication Type B, which shall not be repeated herein any further.

In the above embodiment, the PUSCH transmission may be non-codebook-based PUSCH transmission, and information on a transmission precoder and information on a transmission rank of the PUSCH transmission may be determined according to the above first SRS resource indicator and/or second SRS resource indicator. That is, for the non-codebook-based PUSCH transmission, the terminal equipment may determine a transmission precoder and transmission rank used for transmitting the above PUSCH transmission according to the first SRS resource indicator and/or the second SRS resource indicator. Reference may be made to relevant techniques for contents of the transmission precoder and transmission rank, which shall not be repeated herein any further.

In the above embodiment, the PUSCH transmission may also be codebook-based PUSCH transmission, the downlink control information may further include a first PINL (precoding information and number of layers) indicator and/or a second PINL indicator, and the precoding information of the PUSCH transmission may be determined according to the first SRS resource indicator, the second SRS resource indicator, the first PINL indicator and the second PINL indicator, or may be determined according to the first SRS resource indicator and the first PINL indicator, or may be determined according to the second SRS resource indicator and the second PINL indicator. That is, for the codebook-based PUSCH transmission, the terminal equipment may determine the precoding information and number of layers used for transmitting PUSCH transmission according to one of the above three methods. Reference may be made to relevant techniques for contents of the precoding information and number of layers, which shall not be repeated herein any further.

In the embodiment of this disclosure, for codebook-based or non-codebook-based PUSCH transmission, the terminal equipment is configured with two SRS resource sets for codebook-based or non-codebook-based PUSCH transmission on an active BWP, i.e. SRS source set#1 and SRS source set#2.

The above first SRS resource indicator is used to indicate resources in SRS source set#1. For example, if SRS source set#1 includes more than one SRS resources, a DCI field to which the first SRS resource indicator corresponds (referred to as SRS resource indicator field#1 or SRI field#1) is used to select an SRS resource from SRS source set#1 for transmitting corresponding PUSCH transmission; and if SRS source set#1 includes only one SRS resource, a size of a DCI field to which the first SRS resource indicator corresponds is 0, and the first SRS resource indicator indicates the SRS resource included in SRS source set#1.

The above second SRS resource indicator is used to indicate resources in SRS source set#2. For example, if SRS source set#2 includes more than one SRS resources, a DCI field to which the second SRS resource indicator corresponds (referred to as SRS resource indicator field#2 or SRI field#2) is used to select an SRS resource from SRS source set#2 for transmitting corresponding PUSCH transmission; and if SRS source set#2 includes only one SRS resource, a size of a DCI field to which the second SRS resource indicator corresponds is 0, and the second SRS resource indicator indicates the SRS resource included in SRS source set#2.

In the embodiment of this disclosure, for the codebook-based PUSCH transmission, as described above, the downlink control information further includes a first PINL indicator and a second PINL indicator.

A DCI field to which the first PINL indicator corresponds (precoding information and number of layers#1) is used to indicate the number of layers to which an SRS resource corresponds and a transmission precoder corresponding to the number of layers. The SRS resource is indicated by the above first SRS resource indicator, such as by the above SRS resource indicator field#1. That is, the first SRS resource indicator is used to indicate the SRS resource, and the first PINL indicator is used to indicate the number of layers corresponding to the SRS resource indicated by the first SRS resource indicator and a corresponding transmission precoder. In addition, the second PINL indicator may also be referred to as a TPMI (transmission precoding indicator) and RI (rank indicator). Reference may be made to relevant techniques for contents of the TPMI and RI, which shall not be repeated herein any further.

A DCI field to which the second PINL indicator corresponds (precoding information and number of layers#2) is used to indicate the number of layers to which an SRS resource corresponds and a transmission precoder corresponding to the number of layers. The SRS resource is indicated by the above second SRS resource indicator, such as by the above SRS resource indicator field#2. That is, the second SRS resource indicator is used to indicate the SRS resource, and the second PINL indicator is used to indicate the number of layers corresponding to the SRS resource indicated by the second SRS resource indicator and a corresponding transmission precoder. In addition, the first PINL indicator may also be referred to as a TPMI (transmission precoding indicator) and RI (rank indicator). Reference may be made to relevant techniques for contents of the TPMI and RI, which shall not be repeated herein any further.

In some embodiments, the number of repetitions of the PUSCH transmission is indicated by the above downlink control information. For example, the number of repetitions of the PUSCH transmission is determined according to the number of repetitions indicated in a time domain resource allocation (TDRA) indicator of the downlink control information.

For example, if the number of repetitions is 1, for PUSCH transmission of PUSCH repetition type A, the PUSCH transmission corresponds to a repetition, and for PUSCH transmission of PUSCH repetition type B, the PUSCH transmission corresponds to a nominal repetition.

For another example, if the number of repetitions is 2, for PUSCH transmission of PUSCH repetition type A, the PUSCH transmission corresponds to two repetitions, and for PUSCH transmission of PUSCH repetition type B, the PUSCH transmission corresponds to two nominal repetitions.

In some embodiments, the repetition scheme to which the PUSCH transmission corresponds is configured via radio resource control (RRC) signaling. The repetition scheme may be configured as sequential mapping or cyclic mapping.

If the repetition scheme is configured as sequential mapping, a first and second transmission occasions corresponding to the PUSCH transmission correspond to a TRP. For example, for codebook-based PUSCH transmission, the occasions correspond to an indication of a group of a SRI, a TPMI and an RI, and for non-codebook-based PUSCH transmission, the occasions correspond to an indication of a SRI; in addition, a third and fourth transmission occasions corresponding to the PUSCH transmission correspond to another TRP. For example, for codebook-based PUSCH transmission, the occasions correspond to an indication of another group of a SRI, a TPMI and an RI, and for non-codebook-based PUSCH transmission, the occasions correspond to another indication of a SRI. Subsequent transmission occasions are repeated accordingly.

If the repetition scheme is configured as cyclic mapping, a first transmission occasion corresponding to the PUSCH transmission correspond to a TRP. For example, for codebook-based PUSCH transmission, the occasion corresponds to an indication of a group of a SRI, a TPMI and an RI, and for non-codebook-based PUSCH transmission, the occasion corresponds to an indication of a SRI; in addition, a second transmission occasion corresponding to the PUSCH transmission corresponds to another TRP. For example, for codebook-based PUSCH transmission, the occasion corresponds to an indication of another group of a SRI, a TPMI and an RI, and for non-codebook-based PUSCH transmission, the occasion corresponds to another indication of a SRI. Subsequent transmission occasions are repeated accordingly.

In some embodiments, whether the dynamic switching field in the above downlink control information exists is configured via RRC signaling.

In the above embodiment, the RRC signaling may be used to indicate whether the dynamic switching field exists in a specific DCI format; for example, the RRC signaling is used to indicate whether the dynamic switching field exists in DCI format 0_1; and for another example, the RRC signaling is used to indicate whether the dynamic switching field exists in DCI format 0_2. If a DCI format to which the above downlink control information corresponds is DCI format 0_1 and RRC signaling received by the terminal equipment indicates that the dynamic switching field exists in DCI format 0_1, the terminal equipment assumes that the downlink control information includes the above dynamic switching field. Or, in other words, the RRC signaling indicates that the dynamic switching field exists in DCI format 0_1 and the format to which the downlink control information corresponds is also DCI format 0_1, the terminal equipment assumes that the downlink control information includes the above dynamic switching field.

In the embodiment of this disclosure, "determining whether the PUSCH transmission is transmitted according to one of the first SRS resource indicator and the second SRS resource indicator, or is transmitted according to the first SRS resource indicator and the second SRS resource indicator" may also be described as "determining an SRS resource indicator associated with the PUSCH transmission". In the following explanation, the above two expressions may be interchangeable, which shall not be repeated herein any further.

In some embodiments, the determining an SRS resource indicator associated with the PUSCH transmission according to the number of repetitions of the PUSCH transmission includes that:
if the number of repetitions of the PUSCH transmission is 1, the terminal equipment determines that the PUSCH transmission is transmitted according to the first SRS resource indicator. Therefore, the terminal equipment may transmit the PUSCH transmission according to the first SRS resource indicator when the number of repetitions of the PUSCH transmission is 1.

FIG. 2 is a schematic diagram of an example of the codebook-based PUSCH transmission scheduled by DCI. In the example in FIG. 2, the number of repetitions of the PUSCH transmission is 1, and the terminal equipment transmits the PUSCH transmission according to the first SRS resource indicator.

As shown in FIG. 2, in this example, the PUSCH transmission is codebook-based PUSCH transmission, and the DCI includes the following DCI fields: SRI field#1, SRI field#2, PINL field#1, and PINL field#2, wherein SRI field#1 includes the first SRS resource indicator, SRI field#2 includes the second SRS resource indicator, PINL field#1 includes the first PINL indicator, and PINL field#2 includes the second PINL indicator. Relevant contents of the DCI field have been described above, which shall not be repeated herein any further.

In the example in FIG. 2, the number of repetitions of PUSCH transmission is 1, i.e. corresponding to only one transmission occasion, the PUSCH transmission corresponds to single TRP transmission, and the terminal equipment may transmit the PUSCH transmission according to the first SRS resource indicator, that is, the terminal equipment selects an SRS resource in SRS source set#1 according to an indication of SRI field#1, and determines the number of layers to which the selected SRS resource corresponds and corresponding precoding information according to an indication of PINL field#1. The above SRS resource corresponds to the transmission of PUSCH transmission.

In the above embodiment, the terminal equipment may ignore a DCI field to which the second SRS resource indicator corresponds, wherein the DCI field to which the second SRS resource indicator corresponds includes an SRI field (SRI field#2) corresponding to the second SRS resource indicator, and/or a PINL field (PINL field#2) corresponding to the second SRS resource indicator. That is, the terminal equipment may ignore SRI field#2 and PINL field#2; or, the terminal equipment does not transmit corresponding PUSCH transmission according to the SRI, TPMI and RI to which SRI field#2 and PINL field#2 correspond. As both the SRI field to which the second SRS resource indicator corresponds and the PINL field to which the second SRS resource indicator corresponds are used for transmitting multiple TRP PUSCH transmission, while the PUSCH transmission scheduled by the DCI is single TRP transmission, therefore, the terminal equipment does not need to take the above SRI field and PINL field into account.

In some embodiments, determining the SRS resource indicator associated with the PUSCH transmission according to the number of repetitions of the PUSCH transmission and a repetition scheme to which the PUSCH transmission corresponds, includes that:
if the number of repetitions of the PUSCH transmission is 2 and the repetition scheme to which the PUSCH transmission corresponds is sequential mapping, the terminal equipment determines that the PUSCH transmission is transmitted according to the first SRS resource indicator. Therefore, the terminal equipment may transmit the PUSCH transmission according to the first SRS resource indicator when the number of repetitions of the PUSCH transmission is 2 and the repetition scheme to which the PUSCH transmission corresponds is sequential mapping.

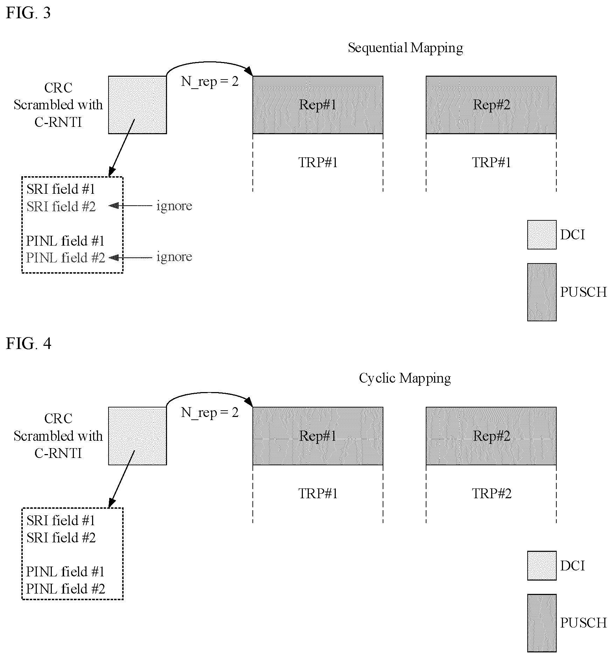

FIG. 3 is a schematic diagram of another example of the codebook-based PUSCH transmission scheduled by DCI. In the example in FIG. 3, the number of repetitions of the PUSCH transmission is 2, the repetition scheme is sequential mapping, and the terminal equipment transmits the PUSCH transmission according to the first SRS resource indicator.

As shown in FIG. 3, in this example, the PUSCH transmission is codebook-based PUSCH transmission, and the DCI includes the following DCI fields: SRI field#1, SRI field#2, PINL field#1, and PINL field#2, wherein SRI field#1 includes the first SRS resource indicator, SRI field#2 includes the second SRS resource indicator, PINL field#1 includes the first PINL indicator, and PINL field#2 includes the second PINL indicator. Relevant contents of the DCI field have been described above, which shall not be repeated herein any further.

In the example in FIG. 3, a repetition scheme to which the PUSCH transmission corresponds is sequential mapping. For example, the terminal equipment has received RRC signaling, the RRC signaling indicating that a repetition scheme used by the PUSCH transmission is sequential mapping. In addition, a meaning of sequential mapping has been described above, which shall not be repeated herein any further.

In the example in FIG. 3, the number of repetitions of PUSCH transmission is 2, i.e. corresponding to two transmission occasions. As the repetition scheme to which the PUSCH transmission corresponds is sequential mapping, former two transmission occasions of the PUSCH transmission correspond to identical TRPs, i.e. corresponding to an indication of a group of a SRI, a TPMI and an RI, the PUSCH transmission corresponds to single TRP transmission, and the terminal equipment transmits the PUSCH transmission according to the first SRS resource indicator, that is, the terminal equipment selects an SRS resource in SRS source set#1 according to an indication of SRI field#1, and determines the number of layers to which the selected SRS resource corresponds and corresponding precoding information according to an indication of PINL field#1. The above SRS resource corresponds to the transmission of PUSCH transmission.

In the above embodiment, the terminal equipment ignores a DCI field to which the second SRS resource indicator corresponds, wherein the DCI field to which the second SRS resource indicator corresponds includes an SRI field (SRI field#2) corresponding to the second SRS resource indicator, and/or a PINL field (PINL field#2) corresponding to the second SRS resource indicator. That is, the terminal equipment may ignore SRI field#2 and PINL field#2; or, the terminal equipment does not transmit corresponding PUSCH transmission according to the SRI, TPMI and RI to which SRI field#2 and PINL field#2 correspond. As both the SRI field to which the second SRS resource indicator corresponds and the PINL field to which the second SRS resource indicator corresponds are used for transmitting multiple TRP PUSCH transmission, while the PUSCH transmission scheduled by the DCI is single TRP transmission, therefore, the terminal equipment does not need to take the above SRI field and PINL field into account.

In some embodiments, determining the SRS resource indicator associated with the PUSCH transmission according to the number of repetitions of the PUSCH transmission and a repetition scheme to which the PUSCH transmission corresponds, includes that:
if the number of repetitions of the PUSCH transmission is 2 and the repetition scheme to which the PUSCH transmission corresponds is cyclic mapping, the terminal equipment determines that the PUSCH transmission is transmitted according to the first SRS resource indicator and the second SRS resource indicator. Therefore, the terminal equipment may transmit the PUSCH transmission according to the first SRS resource indicator and the second SRS resource indicator when the number of repetitions of the PUSCH transmission is 2 and the repetition scheme to which the PUSCH transmission corresponds is cyclic mapping.

FIG. 4 is a schematic diagram of a further example of the codebook-based PUSCH transmission scheduled by DCI. In the example in FIG. 4, the number of repetitions of the PUSCH transmission is 2, the repetition scheme is cyclic mapping, and the terminal equipment transmits the PUSCH transmission according to the first SRS resource indicator and the second SRS resource indicator.

As shown in FIG. 4, in this example, the PUSCH transmission is codebook-based PUSCH transmission, and the DCI includes the following DCI fields: SRI field#1, SRI field#2, PINL field#1, and PINL field#2, wherein SRI field#1 includes the first SRS resource indicator, SRI field#2 includes the second SRS resource indicator, PINL field#1 includes the first PINL indicator, and PINL field#2 includes the second PINL indicator. Relevant contents of the DCI field have been described above, which shall not be repeated herein any further.

In the example in FIG. 4, a repetition scheme to which the PUSCH transmission corresponds is cyclic mapping. For example, the terminal equipment has received RRC signaling, the RRC signaling indicating that a repetition scheme used by the PUSCH transmission is cyclic mapping. In addition, a meaning of the cyclic mapping has been described above, which shall not be repeated herein any further.

In the example in FIG. 4, the number of repetitions of PUSCH transmission is 2, i.e. corresponding to two transmission occasions. As the repetition scheme to which the PUSCH transmission corresponds is cyclic mapping, former two transmission occasions of the PUSCH transmission correspond to different TRPs, i.e. corresponding to different indications of SRI, TPMI and RI, the PUSCH transmission corresponds to multiple TRP transmission, and the terminal equipment may transmit the PUSCH transmission according to the first SRS resource indicator and the second SRS resource indicator, that is, the terminal equipment selects an SRS resource in SRS source set#1 according to an indication of SRI field#1, and determines the number of layers to which the selected SRS resource corresponds and corresponding precoding information according to an indication of PINL field#1; and the terminal equipment selects an SRS resource in SRS source set#2 according to an indication of SRI field#2, and determines the number of layers to which the selected SRS resource corresponds and corresponding precoding information according to an indication of PINL field#2. The above SRS resource corresponds to the transmission of PUSCH transmission.

In some embodiments, determining the SRS resource indicator associated with the PUSCH transmission according to the number of repetitions of the PUSCH transmission, includes that:
if the number of repetitions of the PUSCH transmission is 2, the terminal equipment determines that the PUSCH transmission is transmitted according to the first SRS resource indicator and the second SRS resource indicator. Therefore, the terminal equipment may transmit the PUSCH transmission according to the first SRS resource indicator and the second SRS resource indicator when the number of repetitions of the PUSCH transmission is 2.

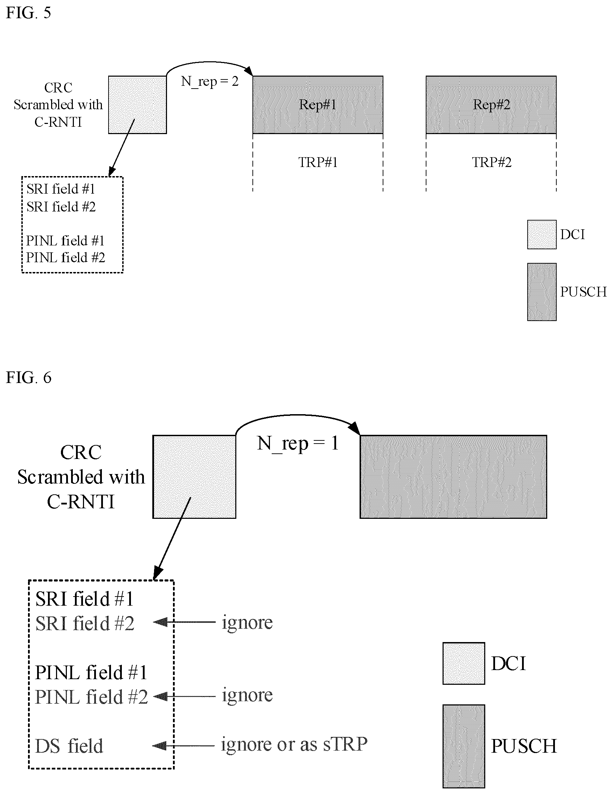

FIG. 5 is a schematic diagram of still another example of the codebook-based PUSCH transmission scheduled by DCI. In the example in FIG. 5, the number of repetitions of the PUSCH transmission is 2, and the terminal equipment transmits the PUSCH transmission according to the first SRS resource indicator and the second SRS resource indicator.

As shown in FIG. 5, in this example, the PUSCH transmission is codebook-based PUSCH transmission, and the DCI includes the following DCI fields: SRI field#1, SRI field#2, PINL field#1, and PINL field#2, wherein SRI field#1 includes the first SRS resource indicator, SRI field#2 includes the second SRS resource indicator, PINL field#1 includes the first PINL indicator, and PINL field#2 includes the second PINL indicator. Relevant contents of the DCI field have been described above, which shall not be repeated herein any further.

In the example in FIG. 5, the number of repetitions of PUSCH transmission is 2, i.e. corresponding to two transmission occasions. The two transmission occasions correspond respectively to different TRPs, i.e. corresponding respectively to independent indications of SRI, TPMI and RI, the PUSCH transmission corresponds to multiple TRP transmission, and the terminal equipment transmits the PUSCH transmission according to the first SRS resource indicator and the second SRS resource indicator, that is, the terminal equipment selects an SRS resource in SRS source set#1 according to an indication of SRI field#1, and determines the number of layers to which the selected SRS resource corresponds and corresponding precoding information according to an indication of PINL field#1; and the terminal equipment selects an SRS resource in SRS source set#2 according to an indication of SRI field#2, and determines the number of layers to which the selected SRS resource corresponds and corresponding precoding information according to an indication of PINL field#2. The above SRS resource corresponds to the transmission of PUSCH transmission.

In some embodiments, determining the SRS resource indicator associated with the PUSCH transmission according to the number of repetitions of the PUSCH transmission and the dynamic switching field included in the downlink control information, includes that:
if the number of repetitions of the PUSCH transmission is 1 and the downlink control information includes the dynamic switching field, the terminal equipment determines that the PUSCH transmission is transmitted according to the first SRS resource indicator. Therefore, the terminal equipment may transmit the PUSCH transmission according to the first SRS resource indicator when the number of repetitions of the PUSCH transmission is 1 and the DCI includes the dynamic switching field.

In some embodiments, determining the SRS resource indicator associated with the PUSCH transmission according to the number of repetitions of the PUSCH transmission and the dynamic switching field included in the downlink control information, includes that:
if the number of repetitions of the PUSCH transmission is 1 and the downlink control information includes the dynamic switching field, the terminal equipment determines that the PUSCH transmission is transmitted according to the first SRS resource indicator and an indication of the dynamic switching field. Therefore, the terminal equipment may transmit the PUSCH transmission according to the first SRS resource indicator and the dynamic switching field when the number of repetitions of the PUSCH transmission is 1 and the DCI includes the dynamic switching field.

FIG. 6 is a schematic diagram of yet further another example of the codebook-based PUSCH transmission scheduled by DCI. In the example in FIG. 6, the DCI further includes a dynamic switching field (shown as a DS field in FIG. 6), the number of repetitions of the PUSCH transmission is 1, and the terminal equipment transmits the PUSCH transmission according to the first SRS resource indicator.

As shown in FIG. 6, in this example, the PUSCH transmission is codebook-based PUSCH transmission, and the DCI includes the following DCI fields: SRI field#1, SRI field#2, PINL field#1, PINL field#2, and the DS field, wherein SRI field#1 includes the first SRS resource indicator, SRI field#2 includes the second SRS resource indicator, PINL field#1 includes the first PINL indicator, PINL field#2 includes the second PINL indicator, and the DS field is the above-described dynamic switching field. Relevant contents of the DCI field have been described above, which shall not be repeated herein any further.

In the above embodiment, the dynamic switching field is used to indicate whether the PUSCH transmission is transmitted according to one of the first SRS resource indicator and the second SRS resource indicator or is transmitted according to the first SRS resource indicator and the second SRS resource indicator. In the embodiments, the PUSCH transmission being transmitted according to one of the first SRS resource indicator and the second SRS resource indicator refers to that the PUSCH transmission is transmitted according to a set of {SRI, TPMI, RI}, and the PUSCH transmission being transmitted according to the first SRS resource indicator and the second SRS resource indicator refers to that the PUSCH transmission is transmitted according to two sets of {SRI, TPMI, RI}. Or, in other words, the dynamic switching field is used to indicate whether the PUSCH transmission is transmitted according to "SRI field#1 and PINL field#1" or is transmitted according to "SRI field#1, SRI field#2, PINL field#1 and PINL field#2".

In the example in FIG. 6, the number of repetitions of PUSCH transmission is 1, i.e. corresponding to one transmission occasion, the PUSCH transmission corresponds to single TRP transmission, and the terminal equipment may transmit the PUSCH transmission according to the first SRS resource indicator, that is, the terminal equipment selects an SRS resource in SRS source set#1 according to an indication of SRI field#1, and determines the number of layers to which the selected SRS resource corresponds and corresponding precoding information according to an indication of PINL field#1. The above SRS resource corresponds to the transmission of PUSCH transmission.

In the above embodiment, the terminal equipment ignores a DCI field to which the second SRS resource indicator corresponds, wherein the DCI field to which the second SRS resource indicator corresponds includes an SRI field corresponding to the second SRS resource indicator, and/or a PINL field corresponding to the second SRS resource indicator. That is, the terminal equipment ignores SRI field#2 and PINL field#2; or, the terminal equipment does not transmit corresponding PUSCH transmission according to the SRI, TPMI and RI to which SRI field#2 and PINL field#2 correspond. As both the SRI field to which the second SRS resource indicator corresponds and the PINL field to which the second SRS resource indicator corresponds are used for transmitting multiple TRP PUSCH transmission, while the PUSCH transmission scheduled by the DCI is single TRP transmission, therefore, the terminal equipment does not need to take the above SRI field and PINL field into account.

In the above embodiment, as the number of repetitions of the PUSCH transmission is 1, i.e. corresponding to one transmission occasion only, hence, it necessarily corresponds to a set of {SRI, TPMI, RI}, and the terminal equipment may ignore the dynamic switching field, i.e. ignoring an indication of the dynamic switching field, or, the terminal equipment may not ignore the dynamic switching field but assume that the dynamic switching field necessarily indicate that the PUSCH transmission is transmitted based on SRI field#1 and PINL field#1.

In some embodiments, determining the SRS resource indicator associated with the PUSCH transmission according to the number of repetitions of the PUSCH transmission and the dynamic switching field included in the downlink control information, includes that:
if the number of repetitions of the PUSCH transmission is 2, the downlink control information includes the dynamic switching field and the dynamic switching field indicates that the PUSCH transmission is transmitted according to one of the first SRS resource indicator and the second SRS resource indicator, the terminal equipment determines that the PUSCH transmission is transmitted according to the first SRS resource indicator. Therefore, the terminal equipment may transmit the PUSCH transmission according to an SRS resource indicator indicated by the dynamic switching field when the dynamic switching field indicates an SRS resource indicator according to which the PUSCH transmission is transmitted.

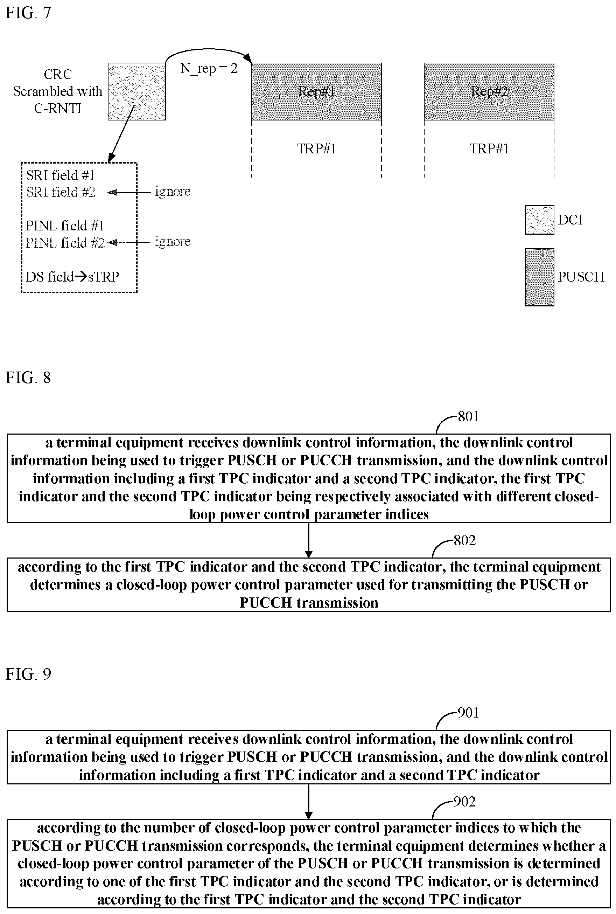

FIG. 7 is a schematic diagram of yet still another example of the codebook-based PUSCH transmission scheduled by DCI. In the example in FIG. 7, the DCI further includes a dynamic switching field (shown as a DS field in FIG. 7), the number of repetitions of the PUSCH transmission is 2, and the terminal equipment transmits the PUSCH transmission according to the first SRS resource indicator or according to the first SRS resource indicator and the dynamic switching field.

As shown in FIG. 7, in this example, the PUSCH transmission is codebook-based PUSCH transmission, and the DCI includes the following DCI fields: SRI field#1, SRI field#2, PINL field#1, PINL field#2, and the DS field, wherein SRI field#1 includes the first SRS resource indicator, SRI field#2 includes the second SRS resource indicator, PINL field#1 includes the first PINL indicator, PINL field#2 includes the second PINL indicator, and the DS field is the above-described dynamic switching field. Relevant contents of the DCI field have been described above, which shall not be repeated herein any further.

In the example in FIG. 7, the number of repetitions of PUSCH transmission is 2, i.e. corresponding to two transmission occasions. As the dynamic switching field indicates that the PUSCH transmission is transmitted according to one of the first SRS resource indicator and the second SRS resource indicator, the PUSCH transmission corresponds to single TRP transmission, and the terminal equipment determines that the PUSCH transmission is based on SRI filed #1 and PINL field #1 according to an indication of the dynamic switching field, and the terminal equipment may transmit the PUSCH transmission according to the first SRS resource indicator, that is, the terminal equipment selects an SRS resource in SRS source set#1 according to an indication of SRI field#1, and determines the number of layers to which the selected SRS resource corresponds and corresponding precoding information according to an indication of PINL field#1. The above SRS resource corresponds to the transmission of PUSCH transmission.

In the above embodiment, the terminal equipment ignores a DCI field to which the second SRS resource indicator corresponds, wherein the DCI field to which the second SRS resource indicator corresponds includes an SRI field corresponding to the second SRS resource indicator, and/or a PINL field corresponding to the second SRS resource indicator. That is, the terminal equipment ignores SRI field#2 and PINL field#2; or, the terminal equipment does not transmit corresponding PUSCH transmission according to the SRI, TPMI and RI to which SRI field#2 and PINL field#2 correspond. As both the SRI field to which the second SRS resource indicator corresponds and the PINL field to which the second SRS resource indicator corresponds are used for transmitting multiple TRP PUSCH transmission, while the PUSCH transmission scheduled by the DCI is single TRP transmission, the terminal equipment does not need to take the above SRI field and PINL field into account.

In some embodiments, determining the SRS resource indicator associated with the PUSCH transmission according to the number of repetitions of the PUSCH transmission and the dynamic switching field included in the downlink control information, includes that:
if the number of repetitions of the PUSCH transmission is 2, the downlink control information includes the dynamic switching field and the dynamic switching field indicates that the PUSCH transmission is transmitted according to the first SRS resource indicator and the second SRS resource indicator, the terminal equipment determines that the PUSCH transmission is transmitted according to the first SRS resource indicator and the second SRS resource indicator.

Thus, the terminal equipment may transmit the PUSCH transmission according to the two SRS resource indicators indicated by the dynamic switching field when the dynamic switching field definitely indicates that the PUSCH transmission is transmitted according to two SRS resource indicators.

The method of the embodiment of this disclosure is described above with reference to FIGs. 2-7 by taking that the PUSCH transmission is codebook-based PUSCH transmission as an example. For cases where the PUSCH transmission is non-codebook-based PUSCH transmission, they are similar to the above cases where the PUSCH transmission is codebook-based PUSCH transmission, with an exception that DCI used for scheduling non-codebook-based PUSCH transmission does not include the above PINL indicator, that is, the DCI format does not include the above PINL field.

According to the method of the embodiment of this disclosure, after receiving the DCI triggering the PUSCH transmission, according to at least one of the number of repetitions of the PUSCH transmission, the repetition scheme to which the PUSCH transmission corresponds and the indication of a DCI field (referred to as a dynamic switching field, which is not limited by its name in this disclosure) in the DCI, the terminal equipment determines which SRS resource indicator or which SRS resource indicators are based to transmit the PUSCH transmission. Hence, whether corresponding uplink transmission corresponds to single TRP transmission or multiple TRP transmission may be accurately determined via the DCI indication, and the uplink transmission is transmitted according to a corresponding DCI indication. Moreover, according to the above DCI indication, the terminal equipment may ignore some DCI fields that are not used.

### Embodiment of a second aspect

The embodiment of this disclosure provides a wireless communication method, which shall be described from a side of a terminal equipment.

FIG. 8 is schematic diagram of the wireless communication method of the embodiment of this disclosure. Referring to FIG. 8, the method includes:
801: a terminal equipment receives downlink control information, the downlink control information being used to trigger PUSCH or PUCCH transmission, and the downlink control information including a first TPC indicator and a second TPC indicator, the first TPC indicator and the second TPC indicator being respectively associated with different closed-loop power control parameter indices; and
802: according to the first TPC indicator and the second TPC indicator, the terminal equipment determines a closed-loop power control parameter used for transmitting the PUSCH or PUCCH transmission.

It should be noted that FIG. 8 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is included in FIG. 8.

According to the method of the embodiment of this disclosure, the two TPC indicators included in the DCI correspond respectively to different closed-loop power control parameter indices. Therefore, when performing single TRP transmission, the terminal equipment may determine the closed-loop power control parameters used for transmitting PUSCH or PUCCH transmission according to one of the TPC indicators, and when performing multiple TRP transmission, the terminal equipment may respectively determine the closed-loop power control parameters used for transmitting PUSCH or PUCCH transmission according to the two TPC indicators.

FIG. 9 is a schematic diagram of another example of the wireless communication method of the embodiment of this disclosure. As shown in FIG. 9, the method includes:
901: a terminal equipment receives downlink control information, the downlink control information being used to trigger PUSCH or PUCCH transmission, and the downlink control information including a first TPC indicator and a second TPC indicator; and
902: according to the number of closed-loop power control parameter indices to which the PUSCH or PUCCH transmission corresponds, the terminal equipment determines whether a closed-loop power control parameter of the PUSCH or PUCCH transmission is determined according to one of the first TPC indicator and the second TPC indicator, or is determined according to the first TPC indicator and the second TPC indicator.

It should be noted that FIG. 9 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is included in FIG. 9.

According to the method of the embodiment of this disclosure, whether a closed-loop power control parameter used for transmitting the PUSCH or PUCCH transmission is determined according to one of the first TPC indicator and the second TPC indicator or is determined according to the first TPC indicator and the second TPC indicator may be determined according to the number of closed-loop power control parameter indices to which the PUSCH or PUCCH transmission corresponds.

In the embodiment of this disclosure, the downlink control information is used to trigger PUSCH transmission or PUCCH transmission, that is, the downlink control information is used to trigger transmission of PUSCH transmission or PUCCH transmission, or the downlink control information is used to schedule transmission of PUSCH transmission or PUCCH transmission, and expressions thereof are not limited in this disclosure.

In the above embodiment, cyclic redundancy check (CRC) of the downlink control information may be scrambled by a C-RNTI or a CS-RNTI, which is not limited in this disclosure. Reference may be made to relevant techniques for a specific scrambling mode, which shall not be repeated herein any further.

In the above embodiment, the DCI format of the downlink control information may be DCI format 0_1, or may be DCI format 0_2, that is, the downlink control information may correspond to DCI format 0_1, or may also correspond to DCI format 0_2. Reference may be made to relevant techniques for contents of the DCI format, which shall not be repeated herein any further.

In the above embodiment, the PUSCH transmission may correspond to PUSCH replication Type A, or may correspond to PUSCH replication Type B, which is not limited in this disclosure. Reference may be made to relevant techniques for definitions of PUSCH replication Type A and PUSCH replication Type B, which shall not be repeated herein any further.

In the above embodiment, the PUSCH transmission may be non-codebook-based PUSCH transmission, or may also be codebook-based PUSCH transmission.

In the embodiment of this disclosure, for codebook-based or non-codebook-based PUSCH transmission, the terminal equipment is configured with two SRS resource sets for codebook-based or non-codebook-based PUSCH transmission on an active BWP, i.e. SRS source set#1 and SRS source set#2.

In the embodiment of this disclosure, regarding the number of closed-loop power control parameter indices corresponding to PUSCH transmission, in some embodiments, the downlink control information further includes a first SRS resource indicator and a second SRS resource indicator, and the number of closed-loop power control parameter indices corresponding to the PUSCH transmission is determined according to the first SRS resource indicator and/or the second SRS resource indicator.

For example, if the PUSCH transmission is transmitted according to one of the first SRS resource indicator and the second SRS resource indicator, the number of closed-loop power control parameter indices corresponding to the PUSCH transmission is 1.

For another example, if the PUSCH transmission is transmitted according to the first SRS resource indicator and the second SRS resource indicator, and a closed-loop power control parameter index associated with the first SRS resource indicator is identical to a closed-loop power control parameter index associated with the second SRS resource indicator, the number of closed-loop power control parameter indices corresponding to the PUSCH transmission is 1.

For a further example, if the PUSCH transmission is transmitted according to the first SRS resource indicator and the second SRS resource indicator and the closed-loop power control parameter index associated with the first SRS resource indicator is different from the closed-loop power control parameter index associated with the second SRS resource indicator, the number of closed-loop power control parameter indices corresponding to the PUSCH transmission is 2.

In the above embodiment, the first SRS resource indicator is used to indicate resources in SRS source set#1. For example, if SRS source set#1 includes more than one SRS resources, a DCI field to which the first SRS resource indicator corresponds (referred to as SRS resource indicator field#1 or SRI field#1) is used to select an SRS resource from SRS source set#1 for transmitting corresponding PUSCH transmission; and if SRS source set#1 includes only one SRS resource, a size of a DCI field to which the first SRS resource indicator corresponds is 0, and the first SRS resource indicator is this SRS resource.

In the above embodiment, the second SRS resource indicator is used to indicate resources in SRS source set#2. For example, if SRS source set#2 includes more than one SRS resources, a DCI field to which the second SRS resource indicator corresponds (referred to as SRS resource indicator field#2 or SRI field#2) is used to select an SRS resource from SRS source set#2 for transmitting corresponding PUSCH transmission; and if SRS source set#2 includes only one SRS resource, a size of a DCI field to which the second SRS resource indicator corresponds is 0, and the second SRS resource indicator is this SRS resource.

In the above embodiment, the first TPC indicator corresponds to the first SRS resource indicator, or corresponds to the DCI field to which the first SRS resource indicator corresponds. And the second TPC indicator corresponds to the second SRS resource indicator, or corresponds to the DCI field to which the second SRS resource indicator corresponds.

In the embodiment of this disclosure, regarding the number of closed-loop power control parameter indices corresponding to PUCCH transmission, in some embodiments, the downlink control information further includes a first PUCCH resource indicator, the first PUCCH resource indicator being used to indicate a PUCCH resource used by the PUCCH transmission. And the number of closed-loop power control parameter indices corresponding to the PUCCH transmission may be determined according to the first PUCCH resource indicator.

For example, if a PUCCH resource indicated by the first PUCCH resource indicator is associated with one closed-loop power index, the number of closed-loop power control parameter indices corresponding to the PUCCH transmission is 1.

In an example, that a PUCCH resource indicated by the first PUCCH resource indicator is associated with one closed-loop power index refers to that the PUCCH resource is associated with one spatial relationship.

In another example, that a PUCCH resource indicated by the first PUCCH resource indicator is associated with one closed-loop power index refers to that the PUCCH resource is associated with two spatial relationships, the two spatial relationships being associated with identical closed-loop power indices.

For another example, if the PUCCH resource indicated by the first PUCCH resource indicator is associated with two closed-loop power indices, the number of closed-loop power control parameter indices corresponding to the PUCCH transmission is 2.

In one example, that the PUCCH resource indicated by the first PUCCH resource indicator is associated with two closed-loop power indices refers to that the PUCCH resource is associated with two spatial relationships, the two spatial relationships being associated with different closed-loop power indices.

Reference may be made to relevant techniques for a concept of the spatial relationship, which shall not be repeated herein any further.

In the embodiment of this disclosure, in 902, if the number of closed-loop power control parameter indices associated with the PUSCH or PUCCH transmission is 1, the terminal equipment determines the closed-loop power control parameter used for transmitting the PUSCH or PUCCH transmission according to one of the first TPC indicator and the second TPC indicator.

For example, if a value of the closed-loop power control parameter index corresponding to the PUSCH or PUCCH transmission is 0, the terminal equipment determines the closed-loop power control parameter used for transmitting the PUSCH or PUCCH transmission according to the first TPC indicator.

For another example, if a value of the closed-loop power control parameter index corresponding to the PUSCH or PUCCH transmission is 1, the terminal equipment determines the closed-loop power control parameter used for transmitting the PUSCH or PUCCH transmission according to the second TPC indicator.

For a further example, as described above, the downlink control information may further include a first SRS resource indicator and a second SRS resource indicator. If the PUSCH transmission is transmitted according to the first SRS resource indicator, the terminal equipment determines the closed-loop power control parameter used for transmitting the PUSCH transmission according to the first TPC indicator.

In the above embodiment, the terminal equipment may ignore or may ignore or neglect a DCI field corresponding to a TPC indicator that is not used for transmitting the PUSCH or PUCCH transmission in the first TPC indicator and the second TPC indicator. For example, if the first TPC indicator is used to determine the closed-loop power control parameter used for transmitting the PUSCH or PUCCH transmission, the terminal equipment may ignore a DCI field (TPC field#2) to which the second TPC indicator corresponds; on the contrary, if the second TPC indicator is used to determine the closed-loop power control parameter used for transmitting the PUSCH or PUCCH transmission, the terminal equipment may ignore a DCI field (TPC field#1) to which the first TPC indicator corresponds.

In the above embodiment, in some embodiments, that the number of closed-loop power control parameter indices associated with PUSCH transmission is 1 refers to:
that the downlink control information further includes a first SRS resource indicator and a second SRS resource indicator;
and the PUSCH transmission is transmitted according to one of the first SRS resource indicator and the second SRS resource indicator.

That is, when the PUSCH transmission is transmitted according to an SRS resource indicator, the SRS resource indicator is associated with a closed-loop power control index, and the PUSCH transmission corresponds to this closed-loop power control index, which means that the number of closed-loop power control parameter indices associated with the PUSCH transmission is 1.

In the above embodiment, in some embodiments, that the number of closed-loop power control parameter indices associated with the PUSCH transmission is 1 refer to:
that the downlink control information further includes a first SRS resource indicator and a second SRS resource indicator;
and the PUSCH transmission is transmitted according to the first SRS resource indicator and the second SRS resource indicator, and a closed-loop power control parameter index associated with the first SRS resource indicator is identical to a closed-loop power control parameter index associated with the second SRS resource indicator.

That is, when the PUSCH transmission is transmitted according to two SRS resource indicators, the two SRS resource indicators correspond respectively to a closed-loop power control index, and when the two closed-loop power control parameter indices are identical, it means that the number of closed-loop power control parameter indices associated with PUSCH transmission is 1.

In the above embodiment, in some embodiments, that the number of closed-loop power control parameter indices associated with PUCCH transmission is 1 refers to:
that the downlink control information further includes a first PUCCH resource indicator, the first PUCCH resource indicator being used to indicate a PUCCH resources used by the PUCCH transmission;
and the PUCCH resource indicated by the first PUCCH resource indicator is associated with one closed-loop power index.

That is, when the PUCCH resource used by the PUCCH transmission is associated with one closed-loop power control parameter index, it means that the number of closed-loop power control parameter indices associated with the PUCCH transmission is 1.

In the above embodiment, that the PUCCH resource indicated by the first PUCCH resource indicator is associated with one closed-loop power index may refer to that the PUCCH resource is associated with one spatial relationship, or may refer to that the PUCCH resource is associated with two spatial relationships, the two spatial relationships being associated with identical closed-loop power indices.

In the embodiment of this disclosure, in 902, if the number of closed-loop power control parameter indices associated with PUSCH or PUCCH transmission is 2, the terminal equipment determines the closed-loop power control parameter used for the PUSCH or PUCCH transmission according to the first TPC indicator and the second TPC indicator.

In some embodiments, a value of the closed-loop power control parameter index to which the first TPC indicator corresponds is 0, and a value of the closed-loop power control parameter index to which the second TPC indicator corresponds is 1.

In some embodiments, as described above, the downlink control information further includes a first SRS resource indicator and a second SRS resource indicator, the closed-loop power control parameter index to which the first TPC indicator corresponds is determined by a closed-loop power control parameter index associated with the first SRS resource indicator, and the closed-loop power control parameter index to which the second TPC indicator corresponds is determined by a closed-loop power control parameter index associated with the second SRS resource indicator.

In the above embodiment, in some embodiments, that the number of closed-loop power control parameter indices associated with the PUSCH transmission is 2 refer to:
that the downlink control information further includes a first SRS resource indicator and a second SRS resource indicator;
and the PUSCH transmission is transmitted according to the first SRS resource indicator and the second SRS resource indicator, and a closed-loop power control parameter index associated with the first SRS resource indicator is different from a closed-loop power control parameter index associated with the second SRS resource indicator.

That is, when the PUSCH transmission is transmitted according to two SRS resource indicators but closed-loop power control parameter indices associated with the two SRS resource indicators are different, it means that the number of closed-loop power control parameter indices associated with the PUSCH transmission is 2.

In the above embodiment, in some embodiments, that the number of closed-loop power control parameter indices associated with PUCCH transmission is 2 refers to:
that the downlink control information further includes a first PUCCH resource indicator, which is used to indicate a PUCCH resource used by PUCCH transmission;
and the PUCCH resource indicated by the first PUCCH resource indicator is associated with two closed-loop power indices.

That is, when the PUCCH resource used by PUCCH transmission is associated with two closed-loop power control parameter indices, it means that the number of closed-loop power control parameter indices associated with the PUCCH transmission is 2.

In the above embodiment, that the PUCCH resource indicated by the first PUCCH resource indicator is associated with two closed-loop power indices refers to that the PUCCH resource is associated with two spatial relationships, the two spatial relationships being associated with different closed-loop power indices.

In the embodiment of this disclosure, for the codebook-based PUSCH transmission, the downlink control information may further include a first PINL indicator and a second PINL indicator.

A DCI field to which the first PINL indicator corresponds (precoding information and number of layers#1) is used to indicate the number of layers to which an SRS resource corresponds and a transmission precoder corresponding to the number of layers. The SRS resource is indicated by the above first SRS resource indicator, such as by the above SRS resource indicator field#1. That is, the first SRS resource indicator is used to indicate the SRS resource, and the first PINL indicator is used to indicate the number of layers corresponding to the SRS resource indicated by the first SRS resource indicator and a corresponding transmission precoder.

A DCI field to which the second PINL indicator corresponds (precoding information and number of layers#2) is used to indicate the number of layers to which an SRS resource correspond and a transmission precoder corresponding to the number of layers. The SRS resource is indicated by the above first SRS resource indicator, such as by the above SRS resource indicator field#1. That is, the second SRS resource indicator is used to indicate the SRS resource, and the second PINL indicator is used to indicate the number of layers corresponding to the SRS resource indicated by the second SRS resource indicator and a corresponding transmission precoder.

In this embodiment of this disclosure, the above downlink control information may further indicate the number of repetitions of the PUSCH transmission. For example, the number of repetitions of the PUSCH transmission is determined according to the number of repetitions indicated in a time domain resource allocation (TDRA) indicator of the downlink control information.

For example, if the number of repetitions is 1, for PUSCH transmission of PUSCH repetition type A, the PUSCH transmission corresponds to a repetition, and for PUSCH transmission of PUSCH repetition type B, the PUSCH transmission corresponds to a nominal repetition.

For another example, if the number of repetitions is 2, for PUSCH transmission of PUSCH repetition type A, the PUSCH transmission corresponds to two repetitions, and for PUSCH transmission of PUSCH repetition type B, the PUSCH transmission corresponds to two nominal repetitions.

For a further example, if the number of repetitions is 4, for PUSCH transmission of PUSCH repetition type A, the PUSCH transmission corresponds to four repetitions, and for PUSCH transmission of PUSCH repetition type B, the PUSCH transmission corresponds to four nominal repetitions.

In the embodiment of this disclosure, the repetition scheme to which the PUSCH transmission corresponds may also be configured via radio resource control (RRC) signaling. For example, the repetition scheme is sequential mapping or cyclic mapping. Relevant contents of the repetition scheme have been described in the embodiment of the first aspect, which are incorporated herein, and shall not be repeated herein any further.

In the embodiment of this disclosure, reference may be made to relevant techniques for a definition of the closed-loop power control parameter index, which shall not be repeated herein any further.

For easier understanding of the method in FIGs. 8 and 9, the method of the embodiment of this disclosure shall be described below with reference to the accompanying drawings.

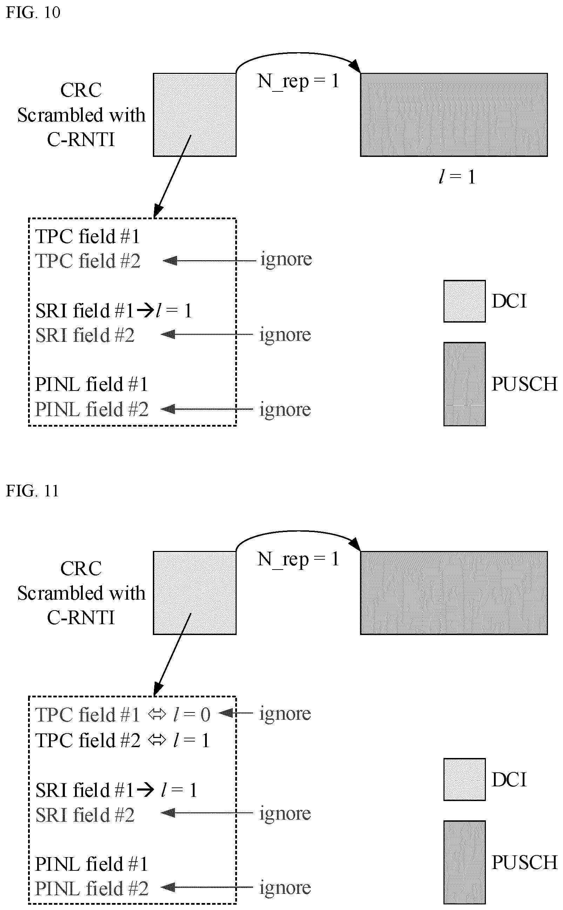

FIG. 10 is a schematic diagram of an example of PUSCH transmission scheduled by DCI. In the example in FIG. 10, the number of repetitions is 1 (N_rep=1), and the terminal equipment determines the closed-loop power control parameter used for transmitting the PUSCH transmission according to the first TPC indicator.

As shown in FIG. 10, in this example, the PUSCH transmission is codebook-based PUSCH transmission, and the DCI includes the following DCI fields: TPC field #1, TPC field #2, SRI field#1, SRI field#2, PINL field#1, and PINL field#2, wherein SRI field#1 includes the first SRS resource indicator, SRI field#2 includes the second SRS resource indicator, PINL field#1 includes the first PINL indicator, PINL field#2 includes the second PINL indicator, TPC field #1 corresponds to the first SRS resource indicator or SRI field#1, and TPC field #2 corresponds to the second SRS resource indicator or SRI field#2. Relevant contents of the DCI field have been described above, which shall not be repeated herein any further.

In the example in FIG. 10, as the PUSCH transmission is transmitted according to the first SRS resource indicator and the second SRS resource indicator is associated with a closed-loop power control parameter index, the number of closed-loop power control parameter indices to which the PUSCH transmission corresponds is 1. As the PUSCH transmission corresponds to a closed-loop power control parameter index, the terminal equipment may determine a value of the closed-loop power control parameter index of corresponding PUSCH transmission according to SRI field#1. In the example in FIG. 10, the value is 1, i.e. *l*=1.

In the example in FIG. 10, as the PUSCH transmission corresponds to only one closed-loop power control parameter index (*l*=1), the terminal equipment determines the closed-loop power control parameter of corresponding PUSCH transmission according to one of the two TPC fields, namely, TPC field#1.

In the example in FIG. 10, the terminal equipment may ignore TPC field#2, or, the terminal equipment does not transmit corresponding PUSCH transmission according to a TPC command to which TPC field#2 corresponds.

FIG. 11 is a schematic diagram of another example of PUSCH transmission scheduled by DCI. In the example in FIG. 11, the number of repetitions is 1 (N_rep=1), and the terminal equipment determines the closed-loop power control parameter used for transmitting the PUSCH transmission according to the second TPC indicator.

As shown in FIG. 11, in this example, the PUSCH transmission is codebook-based PUSCH transmission, and the DCI includes the following DCI fields: TPC field #1, TPC field #2, SRI field#1, SRI field#2, PINL field#1, and PINL field#2, wherein SRI field#1 includes the first SRS resource indicator, SRI field#2 includes the second SRS resource indicator, PINL field#1 includes the first PINL indicator, PINL field#2 includes the second PINL indicator, TPC field #1 is associated with the closed-loop power control parameter index 0 (*l*=0) of the PUSCH transmission, and TPC field #2 is associated with the closed-loop power control parameter index 1 (*l*=1) of the PUSCH transmission. Relevant contents of the DCI field have been described above, which shall not be repeated herein any further.

In the example in FIG. 11, as the PUSCH transmission is transmitted according to the first SRS resource indicator and the second SRS resource indicator is associated with a closed-loop power control parameter index, the number of closed-loop power control parameter indices to which the PUSCH transmission corresponds is 1. As the PUSCH transmission corresponds to a closed-loop power control parameter index, the terminal equipment may determine a value of the closed-loop power control parameter index of corresponding PUSCH transmission according to SRI field#1. In the example in FIG. 11, the value is 1, i.e. *l*=1.

In the example in FIG. 11, as the PUSCH transmission corresponds to only one closed-loop power control parameter index (*l*=1), the terminal equipment determines the closed-loop power control parameter of corresponding PUSCH transmission according to one of the two TPC fields.

In the example in FIG. 11, as TPC field #2 is associated with *l*=1, the terminal equipment determines the closed-loop power control parameter of corresponding PUSCH transmission according to TPC field #2.

In the above embodiment, the terminal equipment may ignore TPC field#1, or, the terminal equipment does not transmit corresponding PUSCH transmission according to a TPC command to which TPC field#1 corresponds.

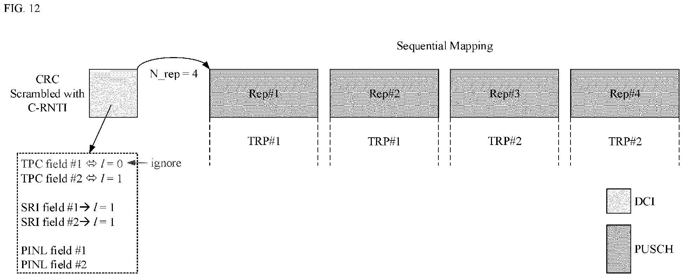

FIG. 12 is a schematic diagram of a further example of PUSCH transmission scheduled by DCI. In the example in FIG. 12, the number of repetitions is 4 (N_rep=4), and the terminal equipment determines the closed-loop power control parameter used for transmitting the PUSCH transmission according to the second TPC indicator.

As shown in FIG. 12, in this example, the PUSCH transmission is codebook-based PUSCH transmission, and the DCI includes the following DCI fields: TPC field #1, TPC field #2, SRI field#1, SRI field#2, PINL field#1, and PINL field#2, wherein SRI field#1 includes the first SRS resource indicator, SRI field#2 includes the second SRS resource indicator, PINL field#1 includes the first PINL indicator, PINL field#2 includes the second PINL indicator, TPC field #1 is associated with the closed-loop power control parameter index 0 (*l*=0) of the PUSCH transmission, and TPC field #2 is associated with the closed-loop power control parameter index 1 (*l*=1) of the PUSCH transmission. Relevant contents of the DCI field have been described above, which shall not be repeated herein any further.

In the example in FIG. 12, a repetition scheme of the PUSCH transmission is sequential mapping, that is, a first transmission occasion and a second transmission occasion corresponding to the PUSCH transmission correspond to a TRP, or correspond to an indication of a set of SRI, TPMI and RI, and a third transmission occasion and a fourth transmission occasion corresponding to the PUSCH transmission correspond to another TRP, or correspond to an indication of another set of SRI, TPMI and RI, and so on.

In the example in FIG. 12, as the PUSCH transmission is transmitted according to the first SRS resource indicator and the second SRS resource indicator but the first SRS resource indicator and the second SRS resource indicator are associated with identical closed-loop power control parameter indices, i.e. *l*=1, the number of closed-loop power control parameter indices to which the PUSCH transmission corresponds is 1. As the PUSCH transmission corresponds to a closed-loop power control parameter index, the terminal equipment may determine a value of the closed-loop power control parameter index of corresponding PUSCH transmission according to SRI field#1 and SRI field#2. In the example in FIG. 12, the value is 1, i.e. *l*=1.

In the example in FIG. 12, as the PUSCH transmission corresponds to only one closed-loop power control parameter index (*l*=1), the terminal equipment determines the closed-loop power control parameter of corresponding PUSCH transmission according to one of the two TPC fields.

In the example in FIG. 12, as TPC field #2 is associated with *l*=1, the terminal equipment determines the closed-loop power control parameter of corresponding PUSCH transmission according to TPC field #2.

In the example in FIG. 12, the terminal equipment may ignore TPC field#1, or, the terminal equipment does not transmit corresponding PUSCH transmission according to a TPC command to which TPC field#1 corresponds.

The method of the embodiment of this disclosure is described above with reference to FIGs. 10-12 by taking that the PUSCH transmission is codebook-based PUSCH transmission as an example. For cases where the PUSCH transmission is non-codebook-based PUSCH transmission, they are similar to the above cases where the PUSCH transmission is codebook-based PUSCH transmission, with an exception that DCI used for scheduling non-codebook-based PUSCH transmission does not include the above PINL indicator, that is, the DCI format does not include the above PINL field.

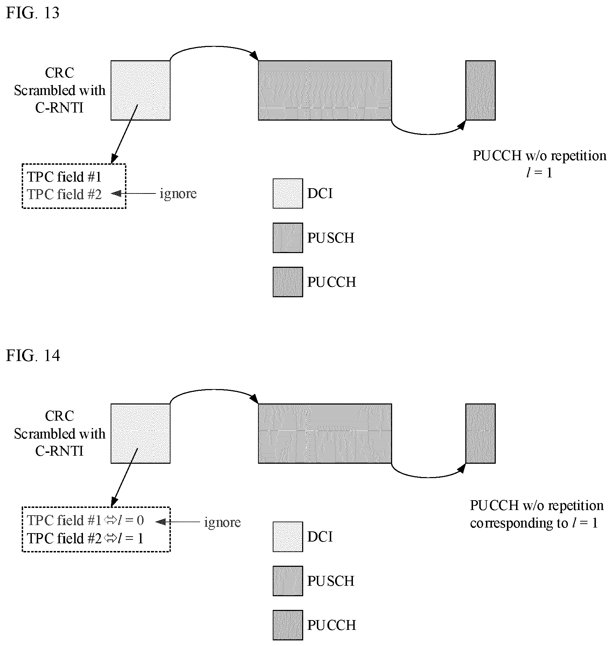

FIG. 13 is a schematic diagram of an example of PUCCH transmission scheduled by DCI. In the example in FIG. 13, the terminal equipment determines the closed-loop power control parameter used for transmitting the PUCCH transmission according to the first TPC indicator.

In the example in FIG. 13, the DCI schedules a PDSCH, the PDSCH having a corresponding PUCCH resource used for feeding back HARQ-ACK information, which is equivalent to that the DCI schedules the PUCCH transmission. In the embodiments, CRC of the DCI may be scrambled by a C-RNTI or may be scrambled by a CS-RNTI, and the DCI may correspond to DCI format 1_1, or may also correspond to DCI format 1_2. In addition, the PUCCH resource carrying the HARQ-ACK information is not repeated, that is, the number of repetitions to which the PUCCH resource corresponds is 1. For example, in corresponding PUCCH configuration *(PUCCH-config), "nrofSlots"* is not configured. Furthermore, the PUCCH resource carrying the HARQ-ACK information corresponds to a closed-loop power control parameter index. For example, the PUCCH is associated with *PUCCH-spatialrelationInfo*, which includes a parameter *closedLoopIndex.* A value of the parameter is 1, that is, the parameter indicates that the closed-loop power control index to which the PUCCH corresponds is 1 (*l*=1). In the example in FIG. 13, the DCI includes the following DCI fields: TPC field#1, and TPC field#2.

In the above embodiment, as the PUCCH transmission corresponds to one closed-loop power control parameter index (i.e. corresponding to *l*=1), the terminal equipment determines the closed-loop power control parameter of corresponding PUCCH transmission according to one of the two TPC fields (TPC field #1).

In the above embodiment, the terminal equipment may ignore TPC field#2; or, the terminal equipment does not transmit corresponding PUCCH transmission according to a TPC command to which TPC field#2 corresponds.

FIG. 14 is a schematic diagram of another example of PUCCH transmission scheduled by DCI. In the example in FIG. 14, the terminal equipment determines the closed-loop power control parameter used for transmitting the PUCCH transmission according to the second TPC indicator.

In the example in FIG. 14, the DCI schedules a PDSCH, the PDSCH having a corresponding PUCCH resource used for feeding back HARQ-ACK information, which is equivalent to that the DCI schedules the PUCCH transmission. In the embodiments, CRC of the DCI may be scrambled by a C-RNTI or may be scrambled by a CS-RNTI, and the DCI may correspond to DCI format 1_1, or may also correspond to DCI format 1_2. In addition, the PUCCH resource carrying the HARQ-ACK information is not repeated, that is, the number of repetitions to which the PUCCH resource corresponds is 1. For example, in corresponding PUCCH configuration *(PUCCH-config), "nrofSlots"* is not configured. Furthermore, the PUCCH resource carrying the HARQ-ACK information corresponds to a closed-loop power control parameter index. For example, the PUCCH is associated with *PUCCH-spatialrelationInfo,* which includes a parameter *closedLoopIndex.* A value of the parameter is 1, that is, the parameter indicates that the closed-loop power control index to which the PUCCH corresponds is 1 (*l*=1). In the example in FIG. 14, the DCI includes the following DCI fields: TPC field#1, and TPC field#2, wherein TPC field #1 is associated with the closed-loop power control parameter index 0 (*l*=0) of the PUCCH, and TPC field #2 is associated with the closed-loop power control parameter index 1 (*l*=1) of the PUCCH.

In the example in FIG. 14, the DCI may further include a PUCCH resource indicator (referred to as a first PUCCH resource indicator), and the terminal equipment may determine the PUCCH resource according to a corresponding PUCCH resource indicator in the DCI, and then obtain a closed-loop power control parameter index ((*l*=1) to which a corresponding PUCCH resource corresponds according to the determined PUCCH resource.

In the above embodiment, as the PUCCH transmission corresponds to a closed-loop power control parameter index (i.e. corresponding to *l*=1), the terminal equipment determines the closed-loop power control parameter of corresponding PUCCH transmission according to one of the two TPC fields. For example, as TPC field#2 is associated with *l*=1 and the PUCCH transmission is also associated with *l*=1, therefore, the terminal equipment determines the closed-loop power control parameter of corresponding PUCCH transmission according to TPC field#2.

In the above embodiment, the terminal equipment may ignore TPC field#2; or, the terminal equipment does not transmit corresponding PUCCH transmission according to a TPC command to which TPC field#2 corresponds.

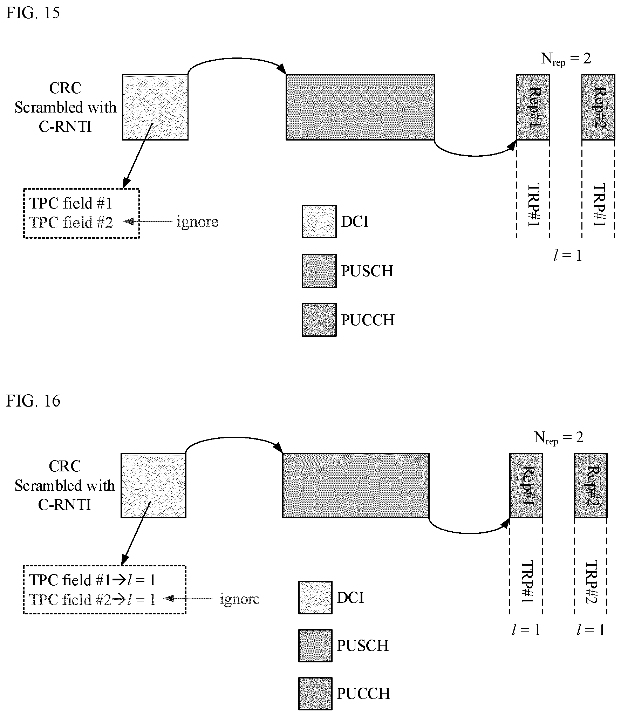

FIG. 15 is a schematic diagram of a further example of PUCCH transmission scheduled by DCI. In the example in FIG. 15, the terminal equipment determines the closed-loop power control parameter used for transmitting the PUCCH transmission according to the first TPC indicator.

In the example in FIG. 15, the DCI schedules a PDSCH, the PDSCH having a corresponding PUCCH resource used for feeding back HARQ-ACK information, which is equivalent to that the DCI schedules the PUCCH transmission. In the embodiments, CRC of the DCI may be scrambled by a C-RNTI or may be scrambled by a CS-RNTI, and the DCI may correspond to DCI format 1_1, or may also correspond to DCI format 1_2. In addition, the PUCCH resource carrying the HARQ-ACK information is repeated, that is, the number of repetitions to which the PUCCH resource corresponds is 2. For example, in corresponding PUCCH configuration *(PUCCH-config),* configured *"nrofSlots"* is n2. Furthermore, the PUCCH resource carrying the HARQ-ACK information corresponds to a closed-loop power control parameter index. For example, the PUCCH is associated with *PUCCH-spatialrelationInfo,* which includes a parameter *closedLoopIndex.* A value of the parameter is 1, that is, the parameter indicates that the closed-loop power control index to which the PUCCH corresponds is 1 (*l*=1). In the example in FIG. 15, the DCI includes the following DCI fields: TPC field#1, and TPC field#2.

In the above embodiment, as the PUCCH transmission corresponds to a closed-loop power control parameter index (i.e. corresponding to *l*=1), the terminal equipment determines the closed-loop power control parameter of corresponding PUCCH transmission according to one of the two TPC fields (TPC field # 1).

In the above embodiment, the terminal equipment may ignore TPC field#2; or, the terminal equipment does not transmit corresponding PUCCH transmission according to a TPC command to which TPC field#2 corresponds.

FIG. 16 is a schematic diagram of still another example of PUCCH transmission scheduled by DCI. In the example in FIG. 16, the terminal equipment determines the closed-loop power control parameter used for transmitting the PUCCH transmission according to the first TPC indicator.

In the example in FIG. 16, the DCI schedules a PDSCH, the PDSCH having a corresponding PUCCH resource used for feeding back HARQ-ACK information, which is equivalent to that the DCI schedules the PUCCH transmission. In the embodiments, CRC of the DCI may be scrambled by a C-RNTI or may be scrambled by a CS-RNTI, and the DCI may correspond to DCI format 1_1, or may also correspond to DCI format 1_2. In addition, the PUCCH resource carrying the HARQ-ACK information is not repeated, that is, the number of repetitions to which the PUCCH resource corresponds is 1. For example, in corresponding PUCCH configuration *(PUCCH-config), "nrofSlots"* is not configured. Furthermore, the PUCCH resource carrying the HARQ-ACK information corresponds to a closed-loop power control parameter index. For example, the PUCCH is associated with *PUCCH-spatialrelationInfo#1* and *PUCCH-spatialrelationInfo#2, PUCCH-spatialrelationInfo#1* including a parameter *closedLoopIndex,* a value of the parameter being 1, i.e. *l*=1, and *PUCCH-spatialrelationInfo#2* including a parameter *closedLoopIndex,* a value of the parameter being 1, i.e. *l*=1.In the example in FIG. 16, the DCI includes the following DCI fields: TPC field#1, and TPC field#2.

In the above embodiment, as the PUCCH transmission corresponds to a closed-loop power control parameter index (i.e. corresponding to *l*=1), the terminal equipment determines the closed-loop power control parameter of corresponding PUCCH transmission according to one of the two TPC fields (TPC field#1).

In the above embodiment, the terminal equipment may ignore TPC field#2; or, the terminal equipment does not transmit corresponding PUCCH transmission according to a TPC command to which TPC field#2 corresponds.

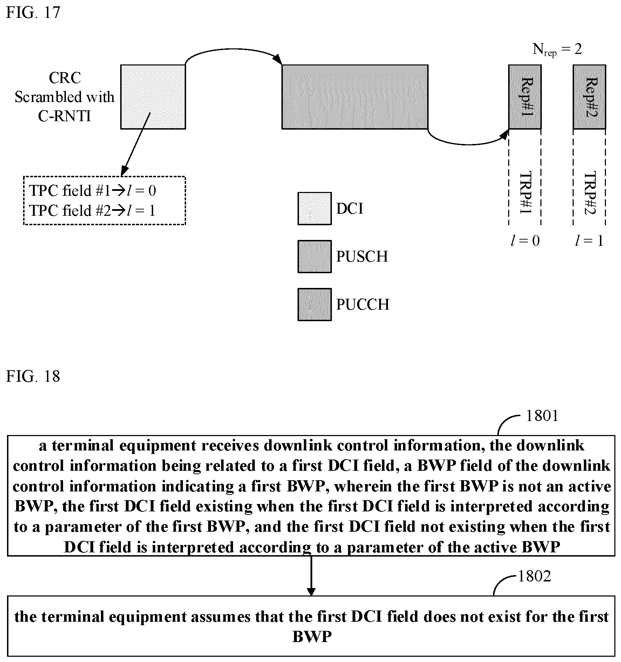

FIG. 17 is a schematic diagram of yet another example of PUCCH transmission scheduled by DCI. In the example in FIG. 17, the terminal equipment determines the closed-loop power control parameter used for transmitting the PUCCH transmission according to the first TPC indicator and the second TPC indicator.

In the example in FIG. 17, the DCI schedules a PDSCH, the PDSCH having a corresponding PUCCH resource used for feeding back HARQ-ACK information, which is equivalent to that the DCI schedules the PUCCH transmission. In the embodiments, CRC of the DCI may be scrambled by a C-RNTI or may be scrambled by a CS-RNTI, and the DCI may correspond to DCI format 1_1, or may also correspond to DCI format 1_2. In addition, the PUCCH resource carrying the HARQ-ACK information is not repeated, that is, the number of repetitions to which the PUCCH resource corresponds is 1. For example, in corresponding PUCCH configuration *(PUCCH-config), "nrofSlots"* is not configured. Furthermore, the PUCCH resource carrying the HARQ-ACK information corresponds to two closed-loop power control parameter indices. For example, the PUCCH is associated with *PUCCH-spatialrelationInfo#1* and *PUCCH-spatialrelationInfo#2, PUCCH-spatialrelationInfo#1* including a parameter *closedLoopIndex,* a value of the parameter being 0, i.e. *l*=0, and *PUCCH-spatialrelationInfo#2* including a parameter *closedLoopIndex,* a value of the parameter being 1, i.e. *l*=1.In the example in FIG. 17, the DCI includes the following DCI fields: TPC field#1, and TPC field#2.

In the above embodiment, as the PUCCH transmission corresponds to two closed-loop power control parameter indices (i.e. corresponding to *l*=1 and *l*=0), the terminal equipment determines the closed-loop power control parameter of corresponding PUCCH transmission according to the two TPC fields (TPC field#1 and TPC field#2). For example, TPC field#1 corresponds to TRP#1, i.e. the case where the closed-loop power control parameter is 0 (*l* = 0), and TPC field#2 corresponds to TRP#2, i.e. the case where the closed-loop power control parameter is 1 (*l* =1)

According to the method of the embodiment of this disclosure, on the one hand, the two TPC indicators included in the DCI correspond respectively to different closed-loop power control parameter indices. Therefore, when performing single TRP transmission, the terminal equipment may determine the closed-loop power control parameter used for transmitting the PUSCH or PUCCH transmission according to one of the TPC indicators, and when performing multiple TRP transmission, the terminal equipment may determine the closed-loop power control parameter used for transmitting PUSCH or PUCCH transmission respectively according to the two TPC indicators. On the other hand, the terminal equipment may determine, according to the number of closed-loop power control parameter indices to which the PUSCH or PUCCH transmission corresponds, whether a closed-loop power control parameter used for transmitting the PUSCH or PUCCH transmission is determined according to one of the first TPC indicator and the second TPC indicator or is determined according to the first TPC indicator and the second TPC indicator. Therefore, when the two TPC indicator included in the DCI are determined, how the terminal equipment determines the power control parameter of the corresponding uplink transmission according to the DCI is clarified, thereby avoiding erroneous indications, and improving reliability of the system.

### Embodiment of a third aspect

The embodiment of this disclosure provides a wireless communication method, which shall be described from a side of a terminal equipment. In the embodiment of this disclosure, unless otherwise specified, an active BWP refers to a BWP where the terminal equipment is currently located, i.e. a BWP before switching, and a first BWP refers to a target BWP when the terminal equipment performs BWP switching, i.e. a BWP after switching.

FIG. 18 is a schematic diagram of an example of the wireless communication method of the embodiment of this disclosure. As shown in FIG. 18, the method includes:
1801: a terminal equipment receives downlink control information, the downlink control information being related to a first DCI field, the first DCI field referring to at least one of the following: *an SRS resource indicator* field, *a precoding information and number of layers* field, *a TPC command for scheduled PUCCH* field, and *a TPC command for scheduled PUSCH* field, a BWP field of the downlink control information indicating a first BWP, wherein the first BWP is not an active BWP, the first DCI field existing when the first DCI field is interpreted according to a parameter of the first BWP, and the first DCI field not existing when the first DCI field is interpreted according to a parameter of the active BWP; and
1802: the terminal equipment assumes that the first DCI field does not exist for the first BWP.

It should be noted that FIG. 18 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is included in FIG. 18.

According to the method of the embodiment of this disclosure, when BWP switching occurs, if a DCI field exists when it is interpreted according to the parameter of the target BWP and does not exist when it is interpreted according to the parameter of the active BWP, as the transmission scheduled by the DCI occurs on the target BWP, it is needed to be indicated by the DCI field. However, the DCI does not include this DCI field. Therefore, in general, the DCI field is interpreted in a zero padding manner, that is, indications of this DCI field are assumed as "all zeros" according to its size in the target BWP. However, if the DCI field is one of *an SRS resource indicator* field, *a precoding information and number of layers* field, *a TPC command for scheduled PUCCH* field and *a TPC command for scheduled PUSCH* field, it is inappropriate to interpret the DCI field as "all zeros", that is, an original intention of the scheduling DCI is changed. For example, if the DCI field is assumed as "all zeros", it means that a corresponding indication is a multi-TRP uplink transmission indication, but in fact, the scheduling DCI is used to indicate single TRP uplink transmission. Therefore, in this method, the terminal equipment does not assume that the DCI is "all zeros", but rather assumes that the DCI field does not exist. This means that according to this method, even if the DCI is interpreted according to the parameter of the target BWP, it is still used to indicate single TRP uplink transmission. Thus, a corresponding DCI field may also be correctly interpreted, thereby avoiding erroneous uplink transmission resulted from mistakenly understanding the DCI by the terminal equipment, and avoiding degradation of system performances.

In some embodiments, that "a DCI field exists when it is interpreted according to the parameter of the first BWP and does not exist when it is interpreted according to the parameter of the active BWP" refers to that the first DCI field is not configured in the active BWP, and the first DCI field is configured in the first BWP. That is, the first DCI field is not configured on the active BWP where the terminal equipment is located, but is configured on the target BWP to which the terminal equipment is switched, and the terminal equipment assumes that the first DCI field does not exist for the target BWP.

In some embodiments, that "the terminal equipment assumes that the first DCI field does not exist for the first BWP" refers to that for the first BWP, the terminal equipment assumes that zero padding is performed when interpreting the first DCI field, and for the first BWP, the terminal equipment ignores the first DCI field. That is, when interpreting the first DCI field for the target BWP, the terminal equipment first performs zero padding on all corresponding bits according to the size of the first DCI field, and then ignores the first DCI field.

In some embodiments, that "the terminal equipment assumes that the first DCI field does not exist for the first BWP" refers to that for the first BWP, the terminal equipment assumes that the first DCI field is not configured. That is, when interpreting the first DCI field for the target BWP, the terminal equipment directly assumes that the first DCI field is not configured.

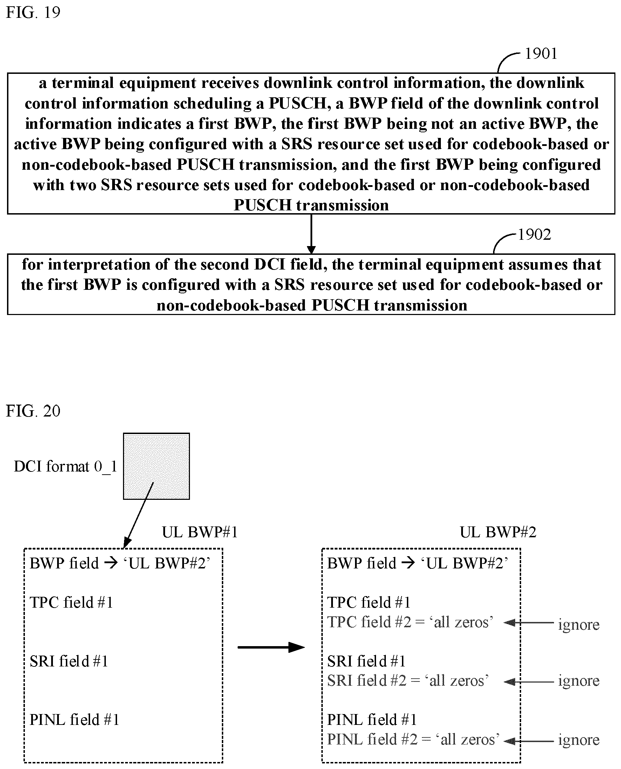

FIG. 19 is a schematic diagram of another example of the wireless communication method of the embodiment of this disclosure. As shown in FIG. 19, the method includes:
1901: a terminal equipment receives downlink control information, the downlink control information scheduling a PUSCH, and the downlink control information being related to a second DCI field, the second DCI field referring to at least one of the following: an *SRS resource indicator* field, a *Precoding information and number of layers* field, wherein, a BWP field of the downlink control information indicates a first BWP, the first BWP being not an active BWP, the active BWP being configured with a SRS resource set used for codebook-based or non-codebook-based PUSCH transmission, and the first BWP being configured with two SRS resource sets used for codebook-based or non-codebook-based PUSCH transmission; and
1902: for interpretation of the second DCI field, the terminal equipment assumes that the first BWP is configured with a SRS resource set used for codebook-based or non-codebook-based PUSCH transmission.

It should be noted that FIG. 19 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is included in FIG. 19.

According to the method of the embodiment of this disclosure, when BWP switching occurs, if it is interpreted according to parameter of target BWP, as two sets of SRS resources are configured, two SRS resource indicators and two PINL indicators exist in the DCI, while if it is interpreted according parameter of active BWP, as only one set of SRS resources is configured, the DCI includes only one SRS resource indicator and one PINL indicator, however, since the transmission scheduled by the DCI occurs on the target BWP, two SRS resource indicators and two PINL indicators are needed. However, as this DCI does not include a second SRS resource indicator and a second PINL indicator, in general, an additional corresponding DCI field is generated in a zero padding manner for an SRS resource indicator and PINL indicator. However, if this DCI field is an *SRS resource indicator* field and/or a *Precoding information and number of layers* field, it is inappropriate to interpret the DCI field as "all zeros", that is, an original intention of the scheduling DCI is changed. For example, if the DCI field is assumed as "all zeros", it means that a corresponding indication is a multi-TRP uplink transmission indication, but in fact, the scheduling DCI is used to indicate single TRP PUSCH transmission. Therefore, in this method, the terminal equipment does not assume that the target BWP is configured with two sets of SRS resources for codebook-based or non-codebook-based PUSCH transmission, but rather assumes that the target BWP is configured with one set of SRS resources for codebook-based or non-codebook-based PUSCH transmission. This means that even if the DCI is interpreted according to the parameter of the target BWP, it is still used to indicate single TRP uplink transmission. Thus, a corresponding DCI field may also be correctly interpreted, thereby avoiding erroneous uplink transmission resulted from mistakenly understanding the DCI by the terminal equipment, and avoiding degradation of system performances.

For easier understanding of the method in FIGs. 18 and 19, the method of the embodiment of this disclosure shall be described below with reference to the accompanying drawings.

Following description is given by taking that the DCI schedules codebook-based PUSCH transmission as an example.

In this example, the DCI format may be DCI format 0_1, or may also be DCI format 0_2, and following description shall be given by taking DCI format 0_1 as an example.

In this example, for DCI format 0_1, a BWP before switching is BWP#1, which is configured with an SRS resource set used for transmitting PUSCH transmission, i.e. SRS resource set#1, and a BWP after switching is BWP#2, which is configured with two SRS resource sets used for transmitting PUSCH transmission, i.e. SRS resource set#2 and SRS resource set#3. Additionally, BWP#2 is further configured with a second TPC field for indicating a closed-loop power control parameter of corresponding PUSCH transmission; or, BWP#2 is further configured with an additional TPC field for indicating a closed-loop power control parameter of corresponding PUSCH transmission.

In this example, CRC of the DCI may be scrambled by a C-RNTI, or may be scrambled by a CS-RNTI. In addition, a BWP (BWP#2) indicated by the BWP field of the DCI is different from the active BWP (BWP#1), that is, the DCI indicates the terminal equipment to perform BWP switching, and the terminal equipment receives the DCI on BWP#1, and performs BWP switching after receiving the DCI, that is, it is switched from BWP#1 to BWP#2. The PUSCH transmission scheduled by the DCI is transmitted on BWP#2, that is, it is transmitted according to a parameter to which BWP#2 corresponds.

In this example, the DCI includes the following DCI fields: *TPC command for scheduled P USCH field# 1* (TPC field#1), *SRS resource indicator field# 1* (SRI field#1), and *Precoding information and number of layers#1* (PINL field#1).

In this example, the PUSCH transmission may correspond to PUSCH repetition Type A, or may also correspond to PUSCH repetition Type B.

FIG. 20 is a schematic diagram of an example of performing BWP switching by the terminal equipment.

As shown in FIG. 20, as a field of DCI format 0_1 is generated according to the parameter of UL BWP#1, the PUSCH transmission needs to be transmitted on UL BWP#2 and the DCI needs to be interpreted according to the parameter of UL BWP#2, in order to avoid erroneous indications, the terminal equipment may perform following processing after receiving the DCI:
step 1: when interpreting the DCI field, determining sizes or bitwidths to which TPC field#2, SRI field#2 and PINL field#2 correspond and corresponding positions at the DCI field according to the parameter of UL BWP#2, and assuming that these bits are all zeros; and
step 2: ignoring these fields (TPC field#2, SRI field#2 and PINL field#2).

In the example in FIG. 20, as the parameter for generating the DCI (the parameter of UL BWP#1) is different from the parameter for interpreting the DCI (the parameter of UL BWP#1), the method of the first step is generally used in existing techniques, so that the PUSCH transmission may be transmitted according to the parameter of the target BWP. However, if the DCI field is assumed as "all zeros", it means that a corresponding indication is a multiple TRP uplink transmission indication, that is, corresponding to two SRS resource indicators, two PINL indicators and two TPC indicators. Actually, the scheduling DCI is used to indicate single TRP uplink transmission, that is, corresponding to one SRS resource indicator, one PINL indicator and one TPC indicator. Therefore, in this method, the terminal equipment does not assume that the DCI is "all zeros", but ignores the DCI field, or assumes that the DCI field does not exist. This means that even if the DCI is interpreted according to the parameter of the target BWP, the terminal equipment may transmit the PUSCH transmission only according to SRI field#1, PINL field#1 and TPC field#1, that is, the DCI is used to indicate single TRP PUSCH transmission. This may prevent the terminal equipment from mistakenly understanding these fields.

With the processing in the above two steps, the terminal equipment may correctly interpret the DCI field after it is switched to the target BWP.

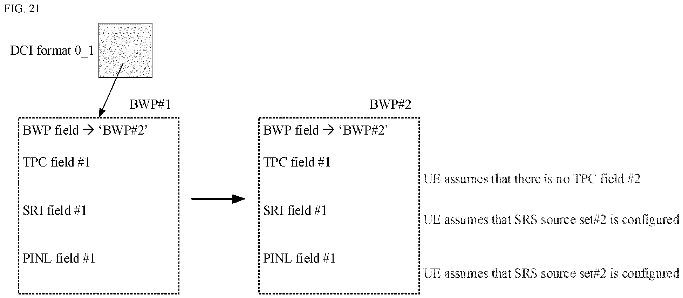

FIG. 21 is a schematic diagram of another example of performing BWP switching by the terminal equipment.

As shown in FIG. 21, as the DCI field is generated according to the parameter of UL BWP#1, while the DCI field needs to be interpreted according to the parameter of UL BWP#2, in order to avoid erroneous indications, after the terminal equipment receives the DCI and when the DCI field is interpreted according to the parameter of UL BWP#2, in order to avoid interpreting the DCI as DCI used for scheduling an mTRP PUSCH, it may be assumed that TPC field#2, SRI field#2 and PINL field#2 do not exist, and/or when SRI field#2 and PINL field#2 of the DCI field is interpreted according to the parameter of UL BWP#2, it may be assumed that SRS resource set#2 is not configured. This ensures that the terminal equipment interprets the DCI as DCI used for scheduling an sTRP PUSCH.

That is, in the above embodiment, as the parameter of UL BWP#1 is unable to generate two TPC indicators, when interpreting the DCI according to UL BWP#2, one of the TPC fields may be ignored, so as to correctly transmit a corresponding PUSCH.

That is, in the above embodiment, as the parameter of UL BWP#1 is unable to generate two SRS resource indicators, when interpreting the DCI according to UL BWP#2, one of the SRS fields may be ignored, so as to correctly transmit a corresponding PUSCH.

In the above embodiment, that the terminal equipment assumes that TPC field#2 does not exist may refer to that the terminal equipment assumes that UL BWP#2 does not configure with the second TPC field (i.e. an additional TPC field) for DCI format 0_1.

The above description is given by taking that the DCI schedules codebook-based PUSCH transmission as an example. However, this disclosure is not limited thereto, and the method of the embodiment of this disclosure is also applicable to non-codebook-based PUSCH transmission, with an exception that there exists no PINL field in the DCI.

Following description shall be given by taking that the DCI schedules PUCCH transmission as an example.

In this example, the DCI format may be DCI format 1_1, or may be DCI format 1_2, and following description shall be given by taking DCI format 1_1 as an example.

In this example, the terminal equipment corresponds to TDD transmission, or, in other words, the terminal equipment corresponds to an unpaired spectrum.

In this example, for DCI format 1_1, a BWP before switching is UL BWP#1, which is not configured with an additional TPC field for indicating the closed-loop power control parameter of the PUCCH, that is, on UL BWP#1, DCI format 1_1 includes only one TPC field, which corresponds to 1 TPC indicator; and a BWP after switching is UL BWP#2, which is configured with an additional TPC field (TPC field#2) for indicating the closed-loop power control parameter of the PUCCH, that is, on UL BWP#2, DCI format 1_1 includes two TPC fields, which correspond to two TPC indicators.

In this example, the DCI schedules PDSCH transmission, and the PDSCH has a corresponding PUCCH resource used for feeding back HARQ-ACK information. In addition, the CRC of the DCI may be scrambled by a C-RNTI, or may be scrambled by a CS-RNTI. Moreover, a BWP indicated by the BWP field of the DCI (DL BWP#2) is different from the active BWP (DL BWP#1), that is, the DCI indicates the terminal equipment to perform DL BWP switching. At this moment, the terminal equipment receives the DCI on DL BWP#1, and performs DL BWP switching after receiving the DCI, that is, it is switched from DL BWP#1 to DL BWP#2. As it is TDD transmission, switching from DL BWP#1 to DL BWP#2 means that the UL BWP needs also to be switched from UL BWP#1 to UL BWP#2. Hence, the PDSCH and PUCCH transmissions scheduled by the DCI are transmitted on BWP#2, that is, they are transmitted according to a parameter to which BWP#2 corresponds.

In the above example, the DCI includes the following DCI field: *TPC command for scheduled PUSCH field#1* (TPC field#1).

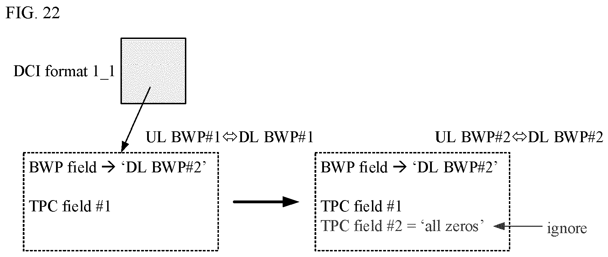

FIG. 22 is a schematic diagram of a further example of performing BWP switching by the terminal equipment.

As shown in FIG. 22, as the TPC field of DCI format 1_1 is generated according to the parameter of UL BWP#1, while the DCI needs to be interpreted according to the parameter of UL BWP#2, in order to avoid erroneous indications, the terminal equipment may perform following processing after receiving the DCI format:
step 1: when interpreting the DCI format, determining a bitwidth to which TPC field#2 corresponds and a corresponding position at the DCI format according to the parameter of UL BWP#2, and assuming that these bits are all zeros; and
step 2: ignoring this field (TPC field#2).

In the example in FIG. 22, as the parameter for generating the DCI (the parameter of UL BWP#1) is different from the parameter for interpreting the DCI (the parameter of UL BWP#1), the method of the first step is generally used in existing techniques, so that the PUSCH transmission may be transmitted according to the parameter of the target BWP. However, if the DCI field (TPC field#2) is assumed as "all zeros", it means that a corresponding indication is a multiple TRP uplink transmission indication (i.e. corresponding to two TPC indicators). Actually, the scheduling DCI is used to indicate single TRP uplink transmission (i.e. corresponding to one TPC indicator). Therefore, in this method, the terminal equipment does not assume that the DCI is "all zeros", but ignores the DCI field, or assumes that the DCI field does not exist. This means that even if the DCI is interpreted according to the parameter of the target BWP, the terminal equipment may transmit the PUSCH transmission only according to TPC field#1. This may prevent the terminal equipment from mistakenly understanding these fields.

With the processing in the above two steps, the terminal equipment may correctly interpret the DCI field after it is switched to the target BWP.

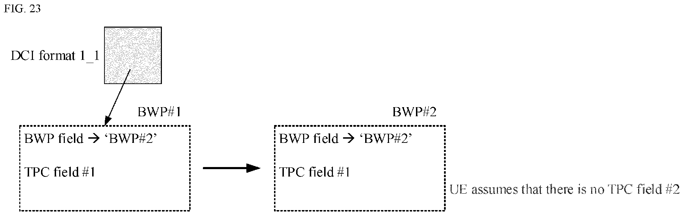

FIG. 23 is a schematic diagram of still another example of performing BWP switching by the terminal equipment.

As shown in FIG. 23, as the field of DCI format 1_1 is generated according to the parameter of UL BWP#1, while the DCI field needs to be interpreted according to the parameter of UL BWP#2, in order to avoid interpreting the DCI as the DCI for scheduling a multiple TRP PUSCH, after receiving the DCI format and when interpreting the DCI format according to the parameter of UL BWP#2, the terminal equipment may assume that TPC field#2 does not exist. This may ensure that when interpreting the DCI according to the parameter of UL BWP#2, the terminal equipment assumes that the DCI is a DCI used for scheduling a single TRP PUSCH (or, in other words, corresponding to one TPC indicator). Hence, that the terminal equipment mistakenly understands an indication of the scheduling DCI may be avoided.

In the above embodiment, that the terminal equipment assumes that TPC field#2 does not exist refers to that the terminal equipment assumes that UL BWP#2 is not configured with a second TPC field (i.e. no additional TPC field is configured on BWP#2) for DCI format 1_1.

According to the method of the embodiment of this disclosure, erroneous uplink transmission resulted from mistakenly understanding the DCI by the terminal equipment may be avoided, thereby avoiding degradation of system performances.

### Embodiment of a fourth aspect

The embodiment of this disclosure provides a wireless communication apparatus. The apparatus may be, for example, a terminal equipment, or may be one or more components or assemblies configured in a terminal equipment.

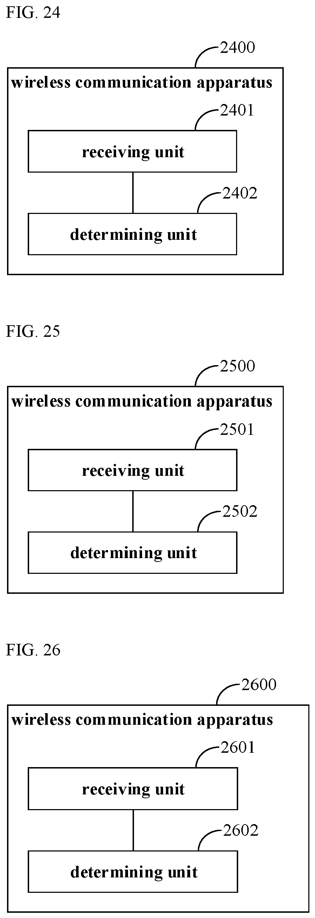

FIG. 24 is a schematic diagram of the wireless communication apparatus of the embodiment of this disclosure. As principles of the apparatus for solving problems are similar to the method of the embodiment of the first aspect, reference may be made to the implementation of the method of the embodiment of the first aspect for specific implementation of the apparatus, with identical contents being not going to be repeated herein any further.

As shown in FIG. 24, the wireless communication apparatus 2400 of the embodiment of this disclosure includes:
a receiving unit 2401 configured to receive downlink control information, the downlink control information being used to trigger PUSCH transmission, and the downlink control information including a first SRS resource indicator and a second SRS resource indicator; and
a determining unit 2402 configured to determine whether the PUSCH transmission is transmitted according to one of the first SRS resource indicator and the second SRS resource indicator, or is transmitted according to the first SRS resource indicator and the second SRS resource indicator, according to at least one of the following indications:
   the number of repetitions of the PUSCH transmission;
   a repetition scheme to which the PUSCH transmission corresponds; and
   an indication of a dynamic switching field in the downlink control information, the dynamic switching field being used to indicate whether the PUSCH transmission is transmitted according to the first SRS resource indicator and the second SRS resource indicator, or is transmitted according to one of the first SRS resource indicator and the second SRS resource indicator.

In the embodiment of this disclosure, the PUSCH transmission corresponds to PUSCH repetition Type A or PUSCH repetition Type B.

In the embodiment of this disclosure, CRC of the downlink control information is scrambled by a C-RNTI or a CS-RNTI.

In the embodiment of this disclosure, the downlink control information corresponds to DCI format 0_1 or DCI format 0_2.

In some embodiments, the number of repetitions of the PUSCH transmission is indicated by the downlink control information. For example, the number of repetitions of the PUSCH transmission is determined by the number of repetitions indicated in a time domain resource allocation (TDRA) indicator of the downlink control information.

In some embodiments, the repetition scheme to which the PUSCH transmission corresponds is configured via radio resource control (RRC) signaling.

In some embodiments, whether the dynamic switching field in the downlink control information exists is configured via radio resource control signaling.

In the above embodiment, the radio resource control signaling is used to indicate a first DCI format, the DCI format to which the downlink control information corresponds being identical to the first DCI format.

In some embodiments, the PUSCH transmission is non-codebook-based PUSCH transmission, and information on a transmission precoder and information on a transmission rank of the PUSCH transmission are determined according to the first SRS resource indicator and/or second SRS resource indicator.

In some embodiments, the PUSCH transmission is codebook-based PUSCH transmission, the downlink control information further includes a first precoding information and number of layers (PINL) indicator and/or a second PINL indicator, and the precoding information and number of layers of the PUSCH transmission are determined according to one of the following:
the first SRS resource indicator, the second SRS resource indicator, the first PINL indicator and the second PINL indicator,
the first SRS resource indicator and the first PINL indicator, and
the second SRS resource indicator and the second PINL indicator.

In some embodiments, if the number of repetitions of the PUSCH transmission is 1, the terminal equipment determines that the PUSCH transmission is transmitted according to the first SRS resource indicator.

In the above embodiment, the terminal equipment may further ignore a DCI field corresponding to the second SRS resource indicator, wherein the DCI field corresponding to the second SRS resource indicator includes: an SRI field corresponding to the second SRS resource indicator, and/or a PINL field corresponding to the second SRS resource indicator.

In some embodiments, if the number of repetitions of the PUSCH transmission is 2 and the repetition scheme to which the PUSCH transmission corresponds is sequential mapping, the terminal equipment determines that the PUSCH transmission is transmitted according to the first SRS resource indicator.

In the above embodiment, the terminal equipment may further ignore a DCI field corresponding to the second SRS resource indicator, wherein the DCI field corresponding to the second SRS resource indicator includes: an SRI field corresponding to the second SRS resource indicator, and/or a PINL field corresponding to the second SRS resource indicator.

In some embodiments, if the number of repetitions of the PUSCH transmission is 2 and the repetition scheme to which the PUSCH transmission corresponds is cyclic mapping, the terminal equipment determines that the PUSCH transmission is transmitted according to the first SRS resource indicator and the second SRS resource indicator.

In some embodiments, if the number of repetitions of the PUSCH transmission is 2, the terminal equipment determines that the PUSCH transmission is transmitted according to the first SRS resource indicator and the second SRS resource indicator.

In some embodiments, if the number of repetitions of the PUSCH transmission is 1 and the downlink control information includes the dynamic switching field, the terminal equipment determines that the PUSCH transmission is transmitted according to the first SRS resource indicator.

In the above embodiment, the terminal equipment may further ignore a DCI field corresponding to the second SRS resource indicator, wherein the DCI field corresponding to the second SRS resource indicator includes an SRI field corresponding to the second SRS resource indicator, and/or a PINL field corresponding to the second SRS resource indicator.

In the above embodiment, the terminal equipment may further ignore the dynamic switching field.

In some embodiments, if the number of repetitions of the PUSCH transmission is 1 and the downlink control information includes the dynamic switching field, the terminal equipment determines that the PUSCH transmission is transmitted according to the first SRS resource indicator and an indication of the dynamic switching field.

In the above embodiment, the terminal equipment may further ignore a DCI field corresponding to the second SRS resource indicator, wherein the DCI field corresponding to the second SRS resource indicator includes an SRI field corresponding to the second SRS resource indicator, and/or a PINL field corresponding to the second SRS resource indicator.

In some embodiments, if the number of repetitions of the PUSCH transmission is greater than or equal to 2, the downlink control information includes the dynamic switching field and the dynamic switching field indicates that the PUSCH transmission is transmitted according to one of the first SRS resource indicator and the second SRS resource indicator, the terminal equipment determines that the PUSCH transmission is transmitted according to the first SRS resource indicator.

In the above embodiment, the terminal equipment may further ignore a DCI field corresponding to the second SRS resource indicator, wherein the DCI field corresponding to the second SRS resource indicator includes an SRI field corresponding to the second SRS resource indicator, and/or a PINL field corresponding to the second SRS resource indicator.

In some embodiments, if the number of repetitions of the PUSCH transmission is greater than or equal to 2, the downlink control information includes the dynamic switching field and the dynamic switching field indicates that the PUSCH transmission is transmitted according to the first SRS resource indicator and the second SRS resource indicator, the terminal equipment determines that the PUSCH transmission is transmitted according to the first SRS resource indicator and the second SRS resource indicator.

It should be noted that the components or modules related to this disclosure are only described above. However, this disclosure is not limited thereto, and the wireless communication apparatus 2400 of the embodiment of this disclosure may further include other components or modules, and reference may be made to related techniques for particulars of these components or modules.

Furthermore, for the sake of simplicity, connection relationships between the components or modules or signal profiles thereof are only illustrated in FIG. 24. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the embodiment of this disclosure, whether corresponding uplink transmission corresponds to single TRP transmission or corresponds multiple TRP transmission may be accurately determined via the DCI indication, and the uplink transmission is transmitted according to a corresponding DCI indication. Moreover, according to the above DCI indication, the terminal equipment may ignore some DCI fields that are not used.

### Embodiment of a fifth aspect

The embodiment of this disclosure provides a wireless communication apparatus. The apparatus may be, for example, a terminal equipment, or may be one or more components or assemblies configured in a terminal equipment.

FIG. 25 is a schematic diagram of an example of the wireless communication apparatus of the embodiment of this disclosure. As principle of the apparatus for solving problems are similar to the method in FIG. 8 of the embodiment of the second aspect, reference may be made to the implementation of the method in FIG. 8 of the embodiment of the second aspect for specific implementation of the apparatus, with identical contents being not going to be repeated herein any further.

As shown in FIG. 25, the wireless communication apparatus 2500 of the embodiment of this disclosure includes:
a receiving unit 2501 configured to receive downlink control information, the downlink control information being used to trigger PUSCH or PUCCH transmission, and the downlink control information including a first TPC indicator and a second TPC indicator, the first TPC indicator and the second TPC indicator being respectively associated with different closed-loop power control parameter indices; and
a determining unit 2502 configured to determine a closed-loop power control parameter used for transmitting the PUSCH or PUCCH transmission according to the first TPC indicator and/or the second TPC indicator.

FIG. 26 is a schematic diagram of another example of the wireless communication apparatus of the embodiment of this disclosure. As principles of the apparatus for solving problems are similar to the method in FIG. 9 of the embodiment of the second aspect, reference may be made to the implementation of the method in FIG. 9 of the embodiment of the second aspect for specific implementation of the apparatus, with identical contents being not going to be repeated herein any further.

As shown in FIG. 26, the wireless communication apparatus 2600 of the embodiment of this disclosure includes:
a receiving unit 2601 configured to receive downlink control information, the downlink control information being used to trigger PUSCH or PUCCH transmission, and the downlink control information including a first TPC indicator and a second TPC indicator; and
a determining unit 2602 configured to, according to the number of closed-loop power control parameter indices to which the PUSCH or PUCCH transmission corresponds, determine whether a closed-loop power control parameter of the PUSCH or PUCCH transmission is determined according to one of the first TPC indicator and the second TPC indicator, or is determined according to the first TPC indicator and the second TPC indicator.

In some embodiments, the downlink control information further includes a first SRS resource indicator and a second SRS resource indicator, and the number of the closed-loop power control parameter indices to which the PUSCH transmission corresponds is determined according to the first SRS resource indicator and/or the second SRS resource indicator.

In the above embodiment, if the PUSCH transmission is transmitted according to one of the first SRS resource indicator and the second SRS resource indicator, the number of closed-loop power control parameter indices to which the PUSCH transmission corresponds is 1.

In the above embodiment, if the PUSCH transmission is transmitted according to the first SRS resource indicator and the second SRS resource indicator and the closed-loop power control parameter indices associated with the first SRS resource indicator and the closed-loop power control parameter indices associated with the second SRS resource indicator are identical, the number of closed-loop power control parameter indices to which the PUSCH transmission corresponds is 1.

In the above embodiment, if the PUSCH transmission is transmitted according to the first SRS resource indicator and the second SRS resource indicator and the closed-loop power control parameter indices associated with the first SRS resource indicator and the closed-loop power control parameter indices associated with the second SRS resource indicator are different, the number of closed-loop power control parameter indices to which the PUSCH transmission corresponds is 2.

In some embodiments, the downlink control information further includes a first PUCCH resource indicator, the first PUCCH resource indicator being used to indicate a PUCCH resource used by the PUCCH transmission. And the number of closed-loop power control parameter indices corresponding to the PUCCH transmission is determined according to the first PUCCH resource indicator.

In the above embodiment, if the PUCCH resource indicated by the first PUCCH resource indicator is associated with one closed-loop power index, the number of closed-loop power control parameter indices to which the PUCCH transmission corresponds is 1.

In the embodiments, that the PUCCH resource indicated by the first PUCCH resource indicator is associated with one closed-loop power index refers to that the PUCCH resource is associated with one spatial relationship.

Or, that the PUCCH resource indicated by the first PUCCH resource indicator is associated with one closed-loop power index refers to that the PUCCH resource is associated with two spatial relationships, the two spatial relationships being associated with identical closed-loop power indices.

In the above embodiment, if the PUCCH resource indicated by the first PUCCH resource indicator is associated with two closed-loop power indices, the number of closed-loop power control parameter indices to which the PUCCH transmission corresponds is 2.

In the embodiments, that the PUCCH resource indicated by the first PUCCH resource indicator is associated with two closed-loop power indices refers to that the PUCCH resource is associated with two spatial relationships, the two spatial relationships being associated with different closed-loop power indices.

In some embodiments, if the number of closed-loop power control parameter indices associated with the PUSCH or PUCCH transmission is 1, the terminal equipment determines the closed-loop power control parameter used for transmitting the PUSCH or PUCCH transmission according to one of the first TPC indicator and the second TPC indicator.

In the above embodiment, if a value of the closed-loop power control parameter index to which the PUSCH or PUCCH transmission corresponds is 0, the terminal equipment determines the closed-loop power control parameter used for transmitting the PUSCH or PUCCH transmission according to the first TPC indicator; and if a value of the closed-loop power control parameter index to which the PUSCH or PUCCH transmission corresponds is 1, the terminal equipment determines the closed-loop power control parameter used for transmitting the PUSCH or PUCCH transmission according to the second TPC indicator.

In the above embodiment, the downlink control information further includes a first SRS resource indicator and a second SRS resource indicator. If the PUSCH transmission is transmitted according to the first SRS resource indicator, the terminal equipment determines the closed-loop power control parameter used for transmitting the PUSCH transmission according to the first TPC indicator.

In the above embodiment, the terminal equipment ignores a DCI field corresponding to a TPC indicator that is not used for determining a closed-loop power control parameter used for transmitting the PUSCH or PUCCH transmission in the first TPC indicator and the second TPC indicator.

In the above embodiment, that the number of closed-loop power control parameter indices associated with PUSCH transmission is 1 refers to, for example:
that the downlink control information further includes a first SRS resource indicator and a second SRS resource indicator;
wherein the PUSCH transmission is transmitted according to one of the first SRS resource indicator and the second SRS resource indicator.

In the above embodiment, that the number of closed-loop power control parameter indices associated with the PUSCH transmission is 1 refer to, for example:
that the downlink control information further includes a first SRS resource indicator and a second SRS resource indicator;
wherein the PUSCH transmission is transmitted according to the first SRS resource indicator and the second SRS resource indicator, and a closed-loop power control parameter index associated with the first SRS resource indicator is identical to a closed-loop power control parameter index associated with the second SRS resource indicator.

In the above embodiment, that the number of closed-loop power control parameter indices associated with PUCCH transmission is 1 refers to, for example:
that the downlink control information further includes a first PUCCH resource indicator, the first PUCCH resource indicator being used to indicate a PUCCH resources used by the PUCCH transmission;
wherein the PUCCH resource indicated by the first PUCCH resource indicator is associated with one closed-loop power index.

In the embodiments, that the PUCCH resource indicated by the first PUCCH resource indicator is associated with one closed-loop power index refers to that the PUCCH resource is associated with one spatial relationship.

Or, that the PUCCH resource indicated by the first PUCCH resource indicator is associated with one closed-loop power index refers to that the PUCCH resource is associated with two spatial relationships, the two spatial relationships being associated with identical closed-loop power indices.

In some embodiments, if the number of closed-loop power control parameter indices associated with PUSCH or PUCCH transmission is 2, the terminal equipment determines the closed-loop power control parameter used for transmitting the PUSCH or PUCCH transmission according to the first TPC indicator and the second TPC indicator.

In the above embodiment, the closed-loop power control parameter index to which the first TPC indicator corresponds is 0, and the closed-loop power control parameter index to which the second TPC indicator corresponds is 1.

In some embodiments, the downlink control information further includes a first SRS resource indicator and a second SRS resource indicator, the closed-loop power control parameter index to which the first TPC indicator corresponds is determined by a closed-loop power control parameter index associated with the first SRS resource indicator, and the closed-loop power control parameter index to which the second TPC indicator corresponds is determined by a closed-loop power control parameter index associated with the second SRS resource indicator.

In the above embodiment, that the number of closed-loop power control parameter indices associated with the PUSCH transmission is 2 refer to, for example:
that the downlink control information further includes a first SRS resource indicator and a second SRS resource indicator;
wherein the PUSCH transmission is transmitted according to the first SRS resource indicator and the second SRS resource indicator, and a closed-loop power control parameter index associated with the first SRS resource indicator is different from a closed-loop power control parameter index associated with the second SRS resource indicator.

In the above embodiment, that the number of closed-loop power control parameter indices associated with PUCCH transmission is 2 refers to, for example:
that the downlink control information further includes a first PUCCH resource indicator, which is used to indicate a PUCCH resource used by the PUCCH transmission;
wherein the PUCCH resource indicated by the first PUCCH resource indicator is associated with two closed-loop power indices.

In the embodiments, that a PUCCH resource indicated by the first PUCCH resource indicator is associated with two closed-loop power indices refers to that the PUCCH resource is associated with two spatial relationships, the two spatial relationships being associated with different closed-loop power indices.

It should be noted that the components or modules related to this disclosure are only described above. However, this disclosure is not limited thereto, and the wireless communication apparatus 2500/2600 of the embodiment of this disclosure may further include other components or modules, and reference may be made to related techniques for particulars of these components or modules.

Furthermore, for the sake of simplicity, connection relationships between the components or modules or signal profiles thereof are only illustrated in FIGs. 25 and 26. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the apparatus of the embodiment of this disclosure, how the terminal equipment determines a power control parameter of corresponding uplink transmission according to the DCI when the DCI includes two TPC indicators is clarified, thereby avoiding erroneous indications, and improving reliability of the system.

### Embodiment of a sixth aspect

The embodiment of this disclosure provides a wireless communication apparatus. The apparatus may be, for example, a terminal equipment, or may be one or more components or assemblies configured in a terminal equipment.

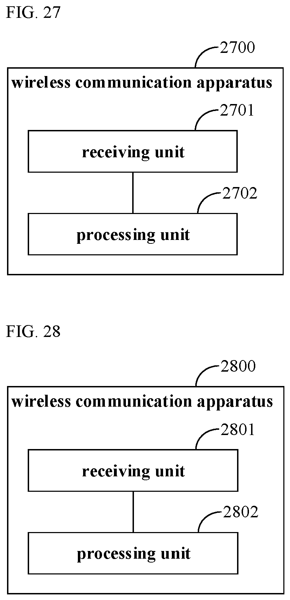

FIG. 27 is a schematic diagram of an example of the wireless communication apparatus of the embodiment of this disclosure. As principles of the apparatus for solving problems are similar to the method in FIG. 18 of the embodiment of the third aspect, reference may be made to the implementation of the method in FIG. 18 of the embodiment of the third aspect for specific implementation of the apparatus, with identical contents being not going to be repeated herein any further.

As shown in FIG. 27, the wireless communication apparatus 2700 of the embodiment of this disclosure includes:
a receiving unit 2701 configured to receive downlink control information, the downlink control information being related to a first DCI field, the first DCI field referring to at least one of the following: an *SRS resource indicator* field, a *precoding information and number of layers* field, a *TPC command for scheduled PUCCH* field, and a *TPC command for scheduled PUSCH* field, a BWP field of the downlink control information indicating a first BWP, wherein the first BWP is not an active BWP, the first DCI field existing when the first DCI field is interpreted according to a parameter of the first BWP, and the first DCI field not existing when the first DCI field is interpreted according to a parameter of the active BWP; and
a processing unit 2702 configured to assume that the first DCI field does not exist for the first BWP.

In some embodiments, that the first DCI field exists when the first DCI field is interpreted according to a parameter of the first BWP, and the first DCI field does not exist when the first DCI field is interpreted according to a parameter of the active BWP refers to that the first DCI field is not configured in the active BWP, and the first DCI field is configured in the first BWP.

In some embodiments, that the processing unit 2702 assumes that the first DCI field does not exist for the first BWP refers to that,
for the first BWP, the processing unit 2702 assumes that zero padding is performed when interpreting the first DCI field, and for the first BWP, the processing unit 2702 ignores the first DCI field.

In some embodiments, that the processing unit 2702 assumes that the first DCI field does not exist for the first BWP refers to that for the first BWP, the terminal equipment assumes that the first DCI field is not configured.

FIG. 28 is a schematic diagram of another example of the wireless communication apparatus of the embodiment of this disclosure. As principles of the apparatus for solving problems are similar to the method in FIG. 19 of the embodiment of the third aspect, reference may be made to the implementation of the method in FIG. 19 of the embodiment of the third aspect for specific implementation of the apparatus, with identical contents being not going to be repeated herein any further.

As shown in FIG. 28, the wireless communication apparatus 2800 of the embodiment of this disclosure includes:
a receiving unit 2801 configured to receive downlink control information, the downlink control information scheduling a PUSCH, and the downlink control information being related to a second DCI field, the second DCI field referring to at least one of the following: an *SRS resource indicator* field, a *Precoding information and number of layers* field, a BWP field of the downlink control information indicates a first BWP, the first BWP being not an active BWP, the active BWP being configured with one SRS resource set used for codebook-based or non-codebook-based PUSCH transmission, and the first BWP being configured with two SRS resource sets used for codebook-based or non-codebook-based PUSCH transmission; and
a processing unit 2802 configured to, for interpretation of the second DCI field, assume that the first BWP is configured with one SRS resource set used for codebook-based or non-codebook-based PUSCH transmission.

It should be noted that the components or modules related to this disclosure are only described above. However, this disclosure is not limited thereto, and the wireless communication apparatus 2700/2800 of the embodiment of this disclosure may further include other components or modules, and reference may be made to related techniques for particulars of these components or modules.

Furthermore, for the sake of simplicity, connection relationships between the components or modules or signal profiles thereof are only illustrated in FIGs. 27 and 28. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the apparatus of the embodiment of this disclosure, erroneous uplink transmission resulted from mistakenly understanding the DCI by the terminal equipment may be avoided, thereby avoiding degradation of system performances.

### Embodiment of a seven aspect

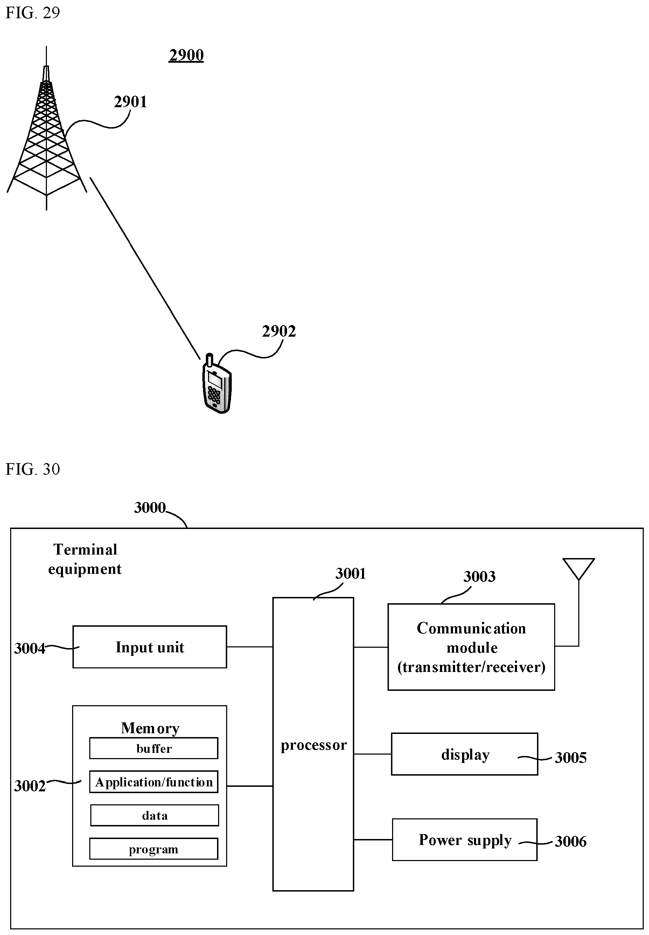

The embodiment of this disclosure provides a communication system. FIG. 29 is a schematic diagram of the communication system of the embodiment of this disclosure. As shown in FIG. 29, the communication system 2900 includes a network device 2901 and a terminal equipment 2902. For the sake of simplification, description is given in FIG. 29 by taking only one terminal equipment and one network device as examples; however, the embodiment of this disclosure is not limited thereto.

In the embodiment of this disclosure, existing services or services that may be implemented in the future may be performed between the network device 2901 and the terminal equipment 2902. For example, such services may include but not limited to an enhanced mobile broadband (eMBB), massive machine type communication (mMTC), ultra-reliable and low-latency communication (URLLC), and vehicle to everything communication (V2X), etc.

In some embodiments, the network device 2901 transmits downlink control information to the terminal equipment 2902, and the terminal equipment 2902 receives the downlink control information transmitted by the network device 2901 and executes the methods as described in the embodiments of the first to third aspects. Contents related to the network device 2901 are not limited in this disclosure. Contents related to the terminal equipment 2902 have been described in detail in the embodiments of the first to third aspects and are incorporated herein, which shall not be described herein any further.

The embodiment of this disclosure further provides a terminal equipment. The terminal equipment may be, for example, a UE; however, this disclosure is not limited thereto, and it may also be another equipment.

FIG. 30 is a schematic diagram of the terminal equipment of the embodiment of this disclosure. As shown in FIG. 30, the terminal equipment 3000 may include a processor 3001 and a memory 3002, the memory 3002 storing data and a program and being coupled to the processor 3001. It should be noted that this figure is illustrative only, and other types of structures may also be used, so as to supplement or replace this structure and achieve a telecommunications function or other functions.

For example, the processor 3001 may be configured to execute a program to carry out the wireless communication method as described in the embodiment of any one of the first to third aspects.

As shown in FIG. 30, the terminal equipment 3000 may further include a communication module 3003, an input unit 3004, a display 3005, and a power supply 3006; wherein functions of the above components are similar to those in the related art, which shall not be described herein any further. It should be noted that the terminal equipment 3000 does not necessarily include all the parts shown in FIG. 30, and the above components are not necessary. Furthermore, the terminal equipment 3000 may include parts not shown in FIG. 30, and the related art may be referred to.

An embodiment of this disclosure provides a computer readable program, which, when executed in a terminal equipment, will cause a computer to carry out the wireless communication method as described in the embodiment of any one of the first to third aspects in the terminal equipment.

An embodiment of this disclosure provides a storage medium storing a computer readable program, which will cause a computer to carry out the wireless communication method as described in the embodiment of any one of the first to third aspects in the terminal equipment.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure.

The invention is defined by the appended claims 1-5.

## Claims

1. A wireless communication apparatus (2500) for a user equipment, UE, configured to be operable in a wireless communication system according to a 3GPP standard and further to support multi transmit-receive point, multi-TRP, uplink transmission, wherein the apparatus (2500) comprises:
a receiver configured to receive downlink control information, DCI, the downlink control information being used to trigger Physical Uplink Control Channel, PUCCH, transmission, and the downlink control information comprising a first Transmit Power Control, TPC, indicator and a second TPC indicator; and
a processor configured to determine, according to the number of closed-loop power control parameter indices, whether a closed-loop power control parameter of the PUCCH transmission to be transmitted is determined according to one of the first TPC indicator and the second TPC indicator, or is determined according to the first TPC indicator and the second TPC indicator, wherein the PUCCH transmission to be transmitted is associated with the closed-loop power control parameter indices;
wherein:
if the number of closed-loop power control parameter indices associated with the PUCCH transmission is 1, the processor determines the closed-loop power control parameter used for transmitting the PUCCH transmission according to one of the first TPC indicator and the second TPC indicator; and
if the number of closed-loop power control parameter indices associated with the PUCCH transmission is 2, the processor determines the closed-loop power control parameter used for transmitting the PUCCH transmission according to the first TPC indicator and the second TPC indicator.

2. The apparatus (2500) according to claim 1, wherein,
the PUCCH transmission is scheduled by a downlink control information corresponding to DCI format 1_1 or DCI format 1_2, and the PUCCH transmission is associated with one or two closed-loop power control parameter indices.

3. The apparatus (2500) according to claim 1, wherein,
if the closed-loop power control parameter index to which the PUCCH transmission corresponds is 0, the processor determines the closed-loop power control parameter used for transmitting the PUCCH transmission according to the first TPC indicator,
if the closed-loop power control parameter index to which the PUCCH transmission corresponds is 1, the processor determines the closed-loop power control parameter used for transmitting the PUCCH transmission according to the second TPC indicator.

4. The apparatus (2500) according to claim 1, wherein,
the processor ignores the DCI field to which one of the first TPC indicator and the second TPC indicator which is not used for determining the closed-loop power control parameter used for transmitting the PUCCH transmission corresponds.

5. The apparatus (2500) according to claim 1, wherein, when the number of closed-loop power control parameter indices associated with the PUCCH transmission is 2, the closed-loop power control parameter index to which the first TPC indicator corresponds is 0; and the closed-loop power control parameter index to which the second TPC indicator corresponds is 1.

## Patentansprüche

1. Drahtlose Kommunikationseinrichtung (2500) für eine Benutzerausrüstung, UE, die konfiguriert ist, in einem drahtlosen Kommunikationssystem gemäß einem 3GPP-Standard betreibbar zu sein und ferner Multi-Transmit-Receive-Point-, Multi-TRP-, Uplink-Übertragung zu unterstützen,
wobei die Einrichtung (2500) umfasst:
einen Empfänger, der konfiguriert ist, Downlink-Steuerungsinformationen, DCI, zu empfangen, wobei die Downlink-Steuerungsinformationen zum Auslösen einer Physical-Uplink-Control-Channel-, PUCCH-, Übertragung verwendet werden, und die Downlink-Steuerungsinformationen einen ersten Sendeleistungssteuerungs-, TPC-, Indikator und einen zweiten TPC-Indikator umfassen; und
einen Prozessor, der konfiguriert ist, gemäß der Anzahl von Indices des Regelparameters der Sendeleistungssteuerung mit geschlossenem Regelkreis zu bestimmen, ob ein Regelparameter der Sendeleistungssteuerung mit geschlossenem Regelkreis der zu übertragenden PUCCH-Übertragung gemäß einem von dem ersten TPC-Indikator und dem zweiten TPC-Indikator bestimmt wird, oder gemäß dem ersten TPC-Indikator und dem zweiten TPC-Indikator bestimmt wird, wobei die zu übertragende PUCCH-Übertragung den Indices des Regelparameters der Sendeleistungssteuerung mit geschlossenem Regelkreis zugeordnet ist;
wobei:
wenn die Anzahl von Indices des Regelparameters der Sendeleistungssteuerung mit geschlossenem Regelkreis, die der PUCCH-Übertragung zugeordnet sind, 1 ist, der Prozessor den Regelparameter der Sendeleistungssteuerung mit geschlossenem Regelkreis, der zum Übertragen der PUCCH-Übertragung verwendet wird, gemäß einem von dem ersten TPC-Indikator und dem zweiten TPC-Indikator bestimmt; und
wenn die Anzahl von Indices des Regelparameters der Sendeleistungssteuerung mit geschlossenem Regelkreis, die der PUCCH-Übertragung zugeordnet sind, 2 ist, der Prozessor den Regelparameter der Sendeleistungssteuerung mit geschlossenem Regelkreis, der zum Übertragen der PUCCH-Übertragung verwendet wird, gemäß dem ersten TPC-Indikator und dem zweiten TPC-Indikator bestimmt.

2. Einrichtung (2500) nach Anspruch 1, wobei,
die PUCCH-Übertragung durch Downlink-Steuerungsinformationen, die dem DCI-Format 1_1 oder dem DCI-Format 1_2 entsprechen, eingeplant ist und die PUCCH-Übertragung einem oder zwei Indices des Regelparameters der Sendeleistungssteuerung mit geschlossenem Regelkreis zugeordnet ist.

3. Einrichtung (2500) nach Anspruch 1, wobei,
wenn der Index des Regelparameters der Sendeleistungssteuerung mit geschlossenem Regelkreis, dem die PUCCH-Übertragung entspricht, 0 ist, der Prozessor den Regelparameter der Sendeleistungssteuerung mit geschlossenem Regelkreis, der zum Übertragen der PUCCH-Übertragung verwendet wird, gemäß dem ersten TPC-Indikator bestimmt,
wenn der Index des Regelparameters der Sendeleistungssteuerung mit geschlossenem Regelkreis, dem die PUCCH-Übertragung entspricht, 1 ist, der Prozessor den Regelparameter der Sendeleistungssteuerung mit geschlossenem Regelkreis, der zum Übertragen der PUCCH-Übertragung verwendet wird, gemäß dem zweiten TPC-Indikator bestimmt.

4. Einrichtung (2500) nach Anspruch 1, wobei,
der Prozessor das DCI-Feld ignoriert, dem derjenige von dem ersten TPC-Indikator und dem zweiten TPC-Indikator, der nicht zum Bestimmen des Regelparameters der Sendeleistungssteuerung mit geschlossenem Regelkreis, der zum Übertragen der PUCCH-Übertragung verwendet wird, verwendet wird, entspricht.

5. Einrichtung (2500) nach Anspruch 1, wobei, wenn die Anzahl von Indices des Regelparameters der Sendeleistungssteuerung mit geschlossenem Regelkreis, die der PUCCH-Übertragung zugeordnet sind, 2 ist, der Index des Regelparameters der Sendeleistungssteuerung mit geschlossenem Regelkreis, dem der erste TPC-Indikator entspricht, 0 ist; und der Index des Regelparameters der Sendeleistungssteuerung mit geschlossenem Regelkreis, dem der zweite TPC-Indikator entspricht, 1 ist.

## Revendications

1. Appareil de communication sans fil (2500) pour un équipement utilisateur, UE, configuré pour pouvoir fonctionner dans un système de communication sans fil selon une norme 3GPP et en outre pour prendre en charge une transmission montante multipoint d'émission-réception, multi-TRP,
dans lequel l'appareil (2500) comprend :
un récepteur configuré pour recevoir des informations de contrôle de liaison descendante, DCI, les informations de contrôle de liaison descendante étant utilisées pour déclencher une transmission de canal physique de contrôle de liaison montante, PUCCH, et les informations de contrôle de liaison descendante comprenant un premier indicateur de contrôle de puissance de transmission, TPC, et un second indicateur TPC ; et
un processeur configuré pour déterminer, selon le nombre d'indices de paramètres de contrôle de puissance en boucle fermée, si un paramètre de contrôle de puissance en boucle fermée de la transmission PUCCH à transmettre est déterminé selon l'un parmi le premier indicateur TPC et le second indicateur TPC, ou est déterminé selon le premier indicateur TPC et le second indicateur TPC, dans lequel la transmission PUCCH à transmettre est associée aux indices de paramètres de contrôle de puissance en boucle fermée ;
dans lequel :
si le nombre d'indices de paramètres de contrôle de puissance en boucle fermée associés à la transmission PUCCH est de 1, le processeur détermine le paramètre de contrôle de puissance en boucle fermée utilisé pour transmettre la transmission PUCCH selon l'un parmi le premier indicateur TPC et le second indicateur TPC ; et
si le nombre d'indices de paramètres de contrôle de puissance en boucle fermée associés à la transmission PUCCH est de 2, le processeur détermine le paramètre de contrôle de puissance en boucle fermée utilisé pour transmettre la transmission PUCCH selon le premier indicateur TPC et le second indicateur TPC.

2. Appareil (2500) selon la revendication 1, dans lequel,
la transmission PUCCH est planifiée par une information de contrôle de liaison descendante correspondant au format DCI 1_1 ou au format DCI 1_2, et la transmission PUCCH est associée à un ou deux indices de paramètres de contrôle de puissance en boucle fermée.

3. Appareil (2500) selon la revendication 1, dans lequel,
si l'indice de paramètre de contrôle de puissance en boucle fermée auquel correspond la transmission PUCCH est 0, le processeur détermine le paramètre de contrôle de puissance en boucle fermée utilisé pour transmettre la transmission PUCCH selon le premier indicateur TPC,
si l'indice de paramètre de contrôle de puissance en boucle fermée auquel correspond la transmission PUCCH est 1, le processeur détermine le paramètre de contrôle de puissance en boucle fermée utilisé pour transmettre la transmission PUCCH selon le second indicateur TPC.

4. Appareil (2500) selon la revendication 1, dans lequel,
le processeur ignore le champ DCI auquel correspond l'un parmi le premier indicateur TPC et le second indicateur TPC qui n'est pas utilisé pour déterminer le paramètre de contrôle de puissance en boucle fermée utilisé pour transmettre la transmission PUCCH.

5. Appareil (2500) selon la revendication 1, dans lequel, lorsque le nombre d'indices de paramètres de contrôle de puissance en boucle fermée associés à la transmission PUCCH est de 2, l'indice de paramètre de contrôle de puissance en boucle fermée auquel correspond le premier indicateur TPC est 0 ; et l'indice de paramètre de contrôle de puissance en boucle fermée auquel correspond le second indicateur TPC est 1.
